# EUROPÄISCHE PATENTSCHRIFT

(11) **EP 3 268 109 B1**
(45) Veröffentlichungstag und Bekanntmachung des Hinweises auf die Patenterteilung: **09.12.2020**
(21) Anmeldenummer: 16703133.5
(22) Anmeldetag: 05.02.2016
(51) Int. Cl.: B01D 46/08, B01D 50/00

(54) **ABSCHEIDEVORRICHTUNG ZUM ABSCHEIDEN VON PARTIKELN**
SEPARATING DEVICE FOR SEPARATING PARTICLES
DISPOSITIF DE SÉPARATION POUR LA SÉPARATION DE PARTICULES

(30) Priorität: 27.02.2015 DE 102015002498
(43) Veröffentlichungstag der Anmeldung: 17.01.2018
(73) Patentinhaber: Dürr Systems AG, 74321 Bietigheim-Bissingen (DE)
(72) Erfinder: SCHÖTTLE, Frank, 70839 Gerlingen (DE)
(74) Vertreter: Kreiser, André Manfred
(86) Internationale Anmeldenummer: PCT/EP2016/052508
(87) Internationale Veröffentlichungsnummer: WO 2016/134953

(56) Entgegenhaltungen:
- EP-A1- 0 875 275
- WO-A1-2015/090942
- DE-A1-102013 004 082
- JP-A- 2004 195 631
- SU-A1- 1 738 307
- US-A- 4 276 064

## Beschreibung

Die vorliegende Erfindung betrifft eine Abscheidevorrichtung zum Abscheiden von Partikeln aus einem Rohgasstrom, wobei im Rohgasstrom ein Anteil fester, flüssiger und/oder pastöser Partikel mitgeführt wird. Der Rohgasstrom passiert die Abscheidevorrichtung in einer Hauptdurchströmungsrichtung, und weist einen Hauptabscheider auf, der wenigstens einen Teil der Partikel aus dem Rohgasstrom abscheidet, wobei der Rohgasstrom den Hauptabscheider in der Hauptdurchströmungsrichtung durchströmt und als Reingasstrom aus dem Hauptabscheider austritt.

Eine Abscheidevorrichtung zum Abscheiden von Partikeln ist beispielsweise aus der DE102007040901A1 bekannt und weist als Hauptabscheider eine Filtervorrichtung zum Abtrennen von Nasslack-Overspray aus einem Overspray-Partikel enthaltenden Rohgasstrom auf. Die Filtervorrichtung umfasst ein Filterelement zum Abtrennen des Oversprays aus dem Rohgasstrom. Der Rohgasstrom durchströmt das Filterelement in einer Hauptdurchströmungsrichtung und tritt als Reingasstrom aus der Filtervorrichtung aus.

Eine Abscheidevorrichtung zum Abscheiden von Partikeln ist außerdem aus der EP0875275A1 und aus der WO2015/090942A1 bekannt und weist eine mehrstufige Abscheidevorrichtung mit einem Vorabscheider und einem Hauptabscheider auf, wobei der Vorabscheider mehrere drehbare Abscheideelemente mit Borsten umfasst, und wobei sich die Borsten benachbarter Abscheideelemente berühren.

Der vorliegenden Erfindung liegt die Aufgabe zugrunde, eine Abscheidevorrichtung bereitzustellen, deren Hauptabscheider eine hohe Standzeit aufweist. Eine solche Abscheidevorrichtung soll außerdem günstig betreibbar sein durch Regenerierung im Betrieb.

Zur Lösung der Aufgabe wird erfindungsgemäß eine gattungsgemäße Abscheidevorrichtung zum Abscheiden von Partikeln aus einem Rohgasstrom vorgeschlagen, die einen Vorabscheider zum Abscheiden wenigstens eines Teils der Partikel aus dem Rohgasstrom aufweist, der derart stromaufwärts zum Hauptabscheider angeordnet ist, dass der Rohgasstrom in der Hauptdurchströmungsrichtung zuerst den Vorabscheider und nachfolgend den Hauptabscheider durchströmt. Der Vorabscheider umfasst ein Abscheideelement, welches zur Umlenkung des Rohgasstroms vorgesehen ist, wobei das Abscheideelement eine Welle sowie ein Radialflächenelement umfasst, das radial von der Welle abstehend an der Welle angeordnet ist, und welches eine an dem Radialflächenelement angeordnete Abscheidefläche aufweist, an der Partikel aus dem Rohgasstrom abgeschieden werden können. Außenkonturen zweier zueinander benachbart angeordneter Abscheideelemente schneiden sich, und die Abscheideflächen zweier zueinander benachbart angeordneter Abscheideelemente weisen einen Abstand zueinander auf. Die Außenkontur eines Abscheideelements ist bevorzugt die Oberfläche eines fiktiven näherungsweise zylinderförmig und/oder prismenförmig ausgebildeten Körpers. Ein Abscheideelement ist kontinuierlich oder intervallweise um eine Rotationsachse drehbar ausgestaltet, um das Abscheideelement zwischen mehreren Arbeitspositionen zu verstellen. Dabei weist das Abscheideelement mindestens zwei Abscheideflächen zum Abscheiden von Partikeln auf, wobei in einer ersten Arbeitsposition des Abscheideelements eine Abscheidefläche des Abscheideelements sich in einer Abscheidestellung befindet, während gleichzeitig eine andere Abscheidefläche desselben Abscheideelements sich in einer Regenerierungsstellung befindet. Eine Abscheidefläche des Abscheideelements wirkt in Abscheidestellung als Strömungsleitelement, das in den Strömungsweg des Rohgasstroms hineinragt, wobei mindestens je eine als Strömungsleitelement wirkende Abscheidefläche zweier benachbart angeordneter Abscheideelemente gemeinsam eine Ablenkung des Rohgasstroms von der Hauptdurchströmungsrichtung bewirken, wodurch die im Rohgasstrom enthaltenen Partikel durch Massenträgheit bedingt an den Abscheideflächen abgeschieden werden, wobei die Abscheideflächen zweiter benachbart angeordneter Abscheideelemente in der Hauptdurchströmungsrichtung derart hintereinander angeordnet sind, dass sie nacheinander vom Rohgasstrom überstrichen werden.

Beim Rohgasstrom handelt es sich um einen Gasstrom, insbesondere um einen Luftstrom, der zumindest zeitweise gewisse Partikel mit sich führt. Der Gasstrom wird beispielsweise in einem Arbeitsbereich mit solchen Partikeln beladen und strömt als Rohgasstrom vom Arbeitsbereich zur Abscheidevorrichtung und durch diese hindurch. In der Abscheidevorrichtung wird der Rohgasstrom entladen, gereinigt und/oder recycliert. Dabei werden Partikel aus dem Rohgasstrom entfernt.

Nachdem der Rohgasstrom entladen, gereinigt und/oder recycliert worden ist, strömt er zunächst als Reingasstrom von der Abscheidevorrichtung in eine optional vorhandene Konditioniervorrichtung und anschließend als Gasstrom in den Arbeitsbereich, um dort erneut Partikel aufzunehmen. Ein Reingasstrom und/oder ein Gasstrom weisen insbesondere eine geringere Anzahl an Partikeln auf als der Rohgasstrom. Optional enthalten der Reingasstrom und/oder der Gasstrom nach Durchströmen der Abscheidevorrichtung keine solchen Partikel mehr, die im Arbeitsbereich in den Rohgasstrom gelangt sind.

Die im Rohgasstrom enthaltenen Partikel umfassen festes, gasförmiges, flüssiges und/oder pastöses Material und/oder ein Stoffgemisch. Feste, flüssige und/oder pastöse Partikel bilden zusammen mit dem Gasstrom ein Aerosol. Bei Partikeln handelt es sich insbesondere um Lackoverspray-Teilchen, bevorzugt um Tröpfchen, die beim Applizieren einer Flüssigkeit auf ein im Arbeitsbereich angeordnetes Werkstück in den Gasstrom und/oder den Rohgasstrom gelangen.

Die Partikel werden vom Gasstrom und/oder vom Rohgasstrom vorzugsweise mitgenommen und in Strömungsrichtung räumlich verlagert. Mittels der Abscheidevorrichtung wird wenigstens ein Teil der Partikel aus dem Gasstrom und/oder dem Rohgasstrom entfernt.

Die Abscheidevorrichtung weist einen Vorabscheider sowie einen Hauptabscheider auf und entfernt Partikel aus dem Rohgasstrom, insbesondere solche Partikel, die in einem Arbeitsbereich von einem Gasstrom, einem Reingasstrom und/oder vom Rohgasstrom aufgenommen worden sind.

Optional weist die Abscheidevorrichtung zusätzlich zu einem Vorabscheider und einem Hauptabscheider einen Nachabscheider auf, der Partikel abscheiden kann, die den Vorabscheider und den Hauptabscheider passiert haben.

Ein Arbeitsbereich umfasst beispielsweise eine Lackierkabine, in der ein Werkstück lackiert wird, und wird von einem Gasstrom durchströmt.

Der Rohgasstrom enthält nach Durchströmen der Abscheidevorrichtung bevorzugt eine geringere Anzahl an Partikeln als vor dem Eintritt in die Abscheidevorrichtung. Optional enthält der Rohgasstrom nach Durchströmen der Abscheidevorrichtung keine Partikel mehr, vorzugsweise keine solchen Partikel mehr, die im Arbeitsbereich in den Rohgasstrom gelangt sind. Ein derart gereinigter Rohgasstrom wird als Reingasstrom bezeichnet und kann insbesondere zumindest teilweise erneut einem Arbeitsbereich, insbesondere demselben oder einem oder mehreren anderen Arbeitsbereichen, zugeführt werden, um dort Partikel aufzunehmen.

Der Hauptabscheider ist vorzugsweise als Einweg-System, als Mehrweg-System und/oder als Dauerfilter ausgebildet. Der Hauptabscheider umfasst zum Beispiel ein keramisches, ein metallisches und/oder ein polymeres Material mit einer Gitterstruktur und/oder mit poröser Konsistenz. Der Hauptabscheider scheidet im Rohgasstrom enthaltene Partikel wenigstens teilweise, vorzugsweise vollständig, aus dem Rohgasstrom ab. Ein Gasstrom tritt dabei als Rohgasstrom in den Hauptabscheider ein, passiert diesen und tritt als Rohgasstrom und/oder als Reingasstrom aus dem Hauptabscheider aus. Optional wird ein Reingasstrom dem Arbeitsbereich anschließend erneut zugeführt.

Der Vorabscheider ist stromaufwärts zum Hauptabscheider angeordnet und scheidet wenigstens einen Teil der im Rohgasstrom enthaltenen Partikel aus dem Rohgasstrom ab. Bei Verwendung einer Abscheidevorrichtung, die einen Vorabscheider und einen Hauptabscheider aufweist, ist der Anteil an Partikeln im Rohgasstrom bei Eintritt des Rohgasstroms in den Hauptabscheider vorzugsweise geringer als bei Verwendung einer Abscheidevorrichtung ohne Vorabscheider. Damit wird eine Belastung des Hauptabscheiders reduziert.

Als Hauptdurchströmungsrichtung ist eine Richtung definiert, in der der Rohgasstrom die Abscheidevorrichtung im Wesentlichen passiert. Vorzugsweise sind der Vorabscheider und der Hauptabscheider derart angeordnet, dass der Rohgasstrom in Hauptdurchströmungsrichtung zunächst den Vorabscheider und nachfolgend den Hauptabscheider passiert.

Bevorzugt sind der Vorabscheider und der Hauptabscheider auf einer Achse angeordnet, die im Wesentlichen parallel zur Hauptdurchströmungsrichtung ausgerichtet ist.

Eine Abscheidevorrichtung kann eine oder mehrere Hauptdurchströmungsrichtungen aufweisen, denen der Rohgasstrom wenigstens zeitweise folgt. Beispielsweise kann eine Hauptdurchströmungsrichtung eines Vorabscheiders von einer Hauptdurchströmungsrichtung eines Hauptabscheiders verschieden sein.

Alternativ oder zusätzlich können der Abscheidevorrichtung neben einer oder mehreren Hauptdurchströmungsrichtungen eine oder mehrere Nebenströmungsrichtungen zugeordnet sein, denen der Rohgasstrom beim Passieren der Abscheidevorrichtung wenigstens zeit- und/oder abschnittsweise folgt.

Eine mittlere Strömungsrichtung des Rohgasstroms beim Passieren der Abscheidevorrichtung entspricht im Wesentlichen der Hauptdurchströmungsrichtung.

Das Abscheideelement ist derart im Strömungsweg des Rohgasstroms angeordnet, dass der den Vorabscheider passierende Rohgasstrom zumindest zum Teil von einer Hauptdurchströmungsrichtung abgelenkt wird, und beispielsweise wenigstens zeitweise einer Nebenströmungsrichtung folgt, die von der Hauptdurchströmungsrichtung abweicht.

Das Abscheideelement umfasst eine Welle sowie ein Radialflächenelement und/oder ein Flächenelement. Ein Radialflächenelement ist radial von der Welle abstehend an der Welle angeordnet.

Optional ist ein Radialflächenelement aus einem Material gebildet, das einen Elastizitätsmodul E aufweist, der zwischen 0,5 kN/mm² und 1.000 kN/mm², bevorzugt zwischen 5 und 250 kN/mm², liegt. Ein Radialflächenelement aus einem derartigen Material kann vorteilhafterweise eine ausreichend hohe Biegesteifigkeit aufweisen, um nicht oder nur wenig vom auf das Radialflächenelement auftreffenden Rohgasstrom verbogen zu werden.

Die Abscheidefläche ist an dem Abscheideelement, insbesondere an einem Radialflächenelement und/oder Flächenelement des Abscheideelements angeordnet. Im Rohgasstrom enthaltene Partikel können wenigstens zeitweise mit der Abscheidefläche interagieren. Die Interaktion der Partikel mit der Abscheidefläche erfolgt wahlweise reversibel oder irreversibel. Dabei ist es möglich, Partikel chemisch und/oder physikalisch an die Abscheidefläche zu binden.

Im Rohgasstrom enthaltene Partikel werden aus dem Rohgasstrom entfernt, wenn der Rohgasstrom beim Passieren des Vorabscheiders wenigstens zum Teil von der Hauptdurchströmungsrichtung abgelenkt wird und wenigstens zeitweise einer Nebenströmungsrichtung folgt. Die im Rohgasstrom enthaltenen Partikel folgen dabei aufgrund von Massenträgheit wenigstens zum Teil weiter der Hauptdurchströmungsrichtung, treffen auf der Abscheidefläche auf und werden dort abgeschieden.

Vorzugsweise ist der Vorabscheider als ein Prallabscheider ausgestaltet, der eine Abscheidefläche aufweist, auf die gewisse Partikel aufprallen, und im Rohgasstrom enthaltene Partikel mittels Massenträgheit abscheidet.

Die Außenkontur eines Abscheideelements ist bevorzugt die Oberfläche eines fiktiven näherungsweise zylinderförmig und/oder prismenförmig ausgebildeten Körpers. Dabei wird betrachtet, ob die Punkte des Abscheideelements, die am weitesten von einer zentralen Längsmittelachse des Abscheideelements entfernt liegen, mithin die äußersten Punkte des Abscheideelements, auf der Oberfläche eines Kreiszylinders oder eines polygonalen Prismas liegen.

Ein Abscheideelement, dessen äußerste Punkte näherungsweise auf der Oberfläche eines Kreiszylinders liegen, weist näherungsweise eine (kreis-)zylinderförmige Außenkontur auf.

Ein Abscheideelement, dessen äußerste Punkte näherungsweise auf der Oberfläche eines polygonalen Prismas liegen, weist näherungsweise eine prismenförmige Außenkontur auf.

Wenn die Entfernung der Mittelpunkte zweier benachbarter Abscheideelemente, die beide näherungsweise eine zylinderförmige Außenkontur aufweisen, kleiner ist als die Summe der Radien dieser beiden Abscheideelemente, dann schneiden sich deren Außenkonturen bevorzugt in einem bestimmten Bereich des Vorabscheiders.

Der Abstand zwischen zwei Abscheideflächen benachbarter Abscheideelemente ist bevorzugt so groß, dass ein Rohgasstrom zwischen den zwei Abscheideflächen hindurchströmen kann.

Bevorzugt liegt der Abstand zwischen zwei Abscheideflächen benachbarter Abscheideelemente in einem Intervall zwischen 0,1 cm und 50 cm.

Besonders bevorzugt liegt der Abstand zwischen zwei Abscheideflächen benachbarter Abscheideelemente in einem Intervall zwischen 1 cm und 20 cm.

In weiterer Ausgestaltung der Erfindung umfasst der Vorabscheider ein Abscheideelement, welches eine Durchlassöffnung zum Durchlassen eines Teils des Rohgasstroms aufweist. Der Rohgasstrom kann diese Durchlassöffnung passieren, wobei zumindest ein Teil von im Rohgasstrom enthaltenen Partikeln bevorzugt am Abscheideelement abgeschieden wird.

Eine Durchlassöffnung kann beispielsweise eine Bohrung in einem Abscheideelement umfassen und ist vorzugsweise in einem Radialflächenelement und/oder in einer Abscheidefläche angeordnet.

Alternativ oder zusätzlich kann ein Abscheideelement eine Vielzahl von Durchlassöffnungen, insbesondere eine Vielzahl von Bohrungen, zum Durchlassen eines Teils des Rohgasstroms aufweisen.

Ein Durchmesser einer Durchlassöffnung ist bevorzugt so gewählt, dass er kleiner ist als ein Durchmesser eines Partikels, bevorzugt kleiner als ein durchschnittlicher Durchmesser mehrerer Partikel.

Ein Abscheideelement weist optional eine Antriebseinheit auf, mittels der das Abscheideelement um eine Rotationsachse gedreht werden kann. Dabei kann eine Antriebseinheit mit einem oder mit mehreren Abscheideelementen in einer kraftschlüssigen Verbindung stehen. Alternativ oder zusätzlich zu einem Antrieb kann ein Abscheideelement eine Bremsvorrichtung aufweisen, mittels der eine Drehung des Abscheideelements um eine Rotationsachse optional und/oder wenigstens zeitweise unterbunden werden kann. Der das Abscheideelement passierende und auf dieses auftreffende Rohgasstrom versetzt das Abscheideelement in eine Drehbewegung, indem im Rohgasstrom enthaltene kinetische Energie auf das Abscheideelement übertragen und in eine Rotationsbewegung um die Rotationsachse umgesetzt wird.

Eine Rotationsachse eines Abscheideelements liegt vorzugsweise innerhalb einer Außenkontur des Abscheideelements.

Besonders bevorzugt liegt eine Rotationsachse auf einer Längsachse, beispielsweise auf einer zentralen Längsachse, der Welle des Abscheideelements. Eine Längsachse erstreckt sich entlang einer Längsrichtung der Welle.

Die Längsrichtung der Welle erstreckt sich beispielsweise weitgehend in vertikaler Richtung.

Alternativ oder zusätzlich erstreckt sich die Längsrichtung der Welle weitgehend in horizontaler Richtung.

Wird das Abscheideelement um eine Rotationsachse gedreht, überstreichen die Außenkanten des Abscheideelements und/oder eine Außenkontur des Abscheideelements einen Rotationskörper in Zylinderform.

Eine Rotationsachse des Abscheideelements liegt bevorzugt auf einer Symmetrieachse des Abscheideelements.

Besonders bevorzugt schneidet eine Rotationsachse den Mittelpunkt von jeder der beiden Stirnflächen des Rotationskörpers und/oder liegt auf einer zentralen Längsachse des Abscheideelements.

Alternativ oder zusätzlich schneidet eine Rotationsachse die zentrale Längsachse des Abscheideelements an einem Punkt innerhalb der Außenkontur des Abscheideelements.

Alternativ oder zusätzlich zu einer Rotationsachse kann ein Abscheideelement eine Schwenkachse aufweisen, um die das Abscheideelement verschwenkt werden kann.

An dem Abscheideelement sind mindestens zwei Radialflächenelemente und/oder Flächenelemente mit jeweils mindestens einer Abscheidefläche vorgesehen, an der Partikel aus dem Rohgasstrom abgeschieden werden können. Vorzugsweise befindet sich eine Abscheidefläche eines Radialflächenelements und/oder eines Flächenelements in einer Abscheidestellung, während sich eine Abscheidefläche eines anderen Radialflächenelements und/oder Flächenelements zur gleichen Zeit in einer Regenerierungsstellung befindet. Jede Abscheidefläche kann wahlweise eine der Stellungen einnehmen.

Eine erste Abscheidefläche liegt vorzugsweise in einer ersten Hilfsebene und eine zweite Abscheidefläche liegt vorzugsweise in einer zweiten Hilfsebene. Besonders bevorzugt liegt eine Schnittachse der zwei sich schneidenden Hilfsebenen auf der Rotationsachse des Abscheideelements. Alternativ hierzu können Schnittachsen von derartigen Hilfsebenen auch neben einer Rotationsachse eines Abscheideelements liegen.

In der Abscheidestellung ist eine Abscheidefläche in Bezug auf den Rohgasstrom derart angeordnet, dass ein dynamischer Gasdruck an der Abscheidefläche zeitweise ungleich Null ist. Bevorzugt liegen turbulente Strömungsbedingungen im Rohgasstrom vor, wobei wenigstens eine Richtungskomponente des Rohgasstroms auf die Abscheidefläche ausgerichtet ist. Der Rohgasstrom und/oder die Partikel im Rohgasstrom kollidieren mit der Abscheidefläche und die Partikel werden an der Abscheidefläche abgeschieden, wenn sich die Abscheidefläche in der Abscheidestellung befindet.

Eine in der Abscheidestellung angeordnete Abscheidefläche befindet sich vorzugsweise in einer Abscheidezone des Vorabscheiders.

In der Regenerierungsstellung ist eine Abscheidefläche in Bezug auf den Rohgasstrom derart angeordnet, dass der dynamische Gasdruck an der Abscheidefläche im Regelfall wenigstens näherungsweise gleich Null ist. Bevorzugt ist an der Abscheidefläche eine ruhende Gasschicht ausgebildet. Der Rohgasstrom und/oder die Partikel im Rohgasstrom kollidieren optional und/oder vorübergehend nicht mit der Abscheidefläche und wenigstens zeitweise werden keine Partikel an der Abscheidefläche abgeschieden, wenn sich die Abscheidefläche in der Regenerierungsstellung befindet.

Eine in der Regenerierungsstellung angeordnete Abscheidefläche befindet sich vorzugsweise in einer Regenerierungszone des Vorabscheiders.

Ein Drehen des Abscheideelements um die Rotationsachse bewirkt ein Verstellen des Abscheideelements zwischen den Arbeitspositionen. In einer ersten Arbeitsposition des Abscheideelements nimmt eine erste Abscheidefläche dieses Abscheideelements eine Abscheidestellung ein und ist in einer Abscheidezone angeordnet, während gleichzeitig eine zweite Abscheidefläche desselben Abscheideelements eine Regenerierungsstellung einnimmt und in einer Regenerierungszone angeordnet ist. In einer zweiten Arbeitsposition des Abscheideelements nimmt die erste Abscheidefläche des Abscheideelements eine Regenerierungsstellung ein, während gleichzeitig die zweite Abscheidefläche desselben Abscheideelements eine Abscheidestellung einnimmt. Vorzugsweise werden an der einen Abscheidefläche Partikel abgeschieden, während zum gleichen Zeitpunkt an der anderen Abscheidefläche keine Partikel abgeschieden werden. Weiter vorzugsweise werden an der einen Abscheidefläche Partikel abgeschieden, während die andere Abscheidefläche von abgeschiedenen Partikeln befreit wird.

Neben einer ersten Arbeitsposition und einer zweiten Arbeitsposition können optional weitere Arbeitspositionen für ein Abscheideelement vorgesehen sein. Damit beispielsweise eine Abscheidefläche neben einer Abscheidestellung und einer Regenerierungsstellung wenigstens vorübergehend eine Übergangsstellung und/oder eine Ruhestellung einnehmen kann, ist optional eine dritte Arbeitsposition für das Abscheideelement vorgesehen. In einer solchen dritten Arbeitsposition kann eine Abscheidefläche wenigstens vorübergehend teilweise oder vollständig aus dem Strömungsweg des Rohgasstroms und/oder aus dem Vorabscheider entfernt werden. Dadurch befindet sich die Abscheidefläche außerhalb des vom Rohgasstrom durchströmten Bereichs, wobei im Rohgasstrom enthaltene Partikel an einer anderen Abscheidefläche abgeschieden werden, oder alternativ den Vorabscheider passieren können. Eine in einer Übergangs- und/oder Ruhestellung angeordnete Abscheidefläche befindet sich bevorzugt in einer Übergangs- und/oder Ruhezone.

Optional nimmt eine bestimmte Abscheidefläche in jeder Arbeitsposition eines Abscheideelements eine andere Stellung ein als in einer anderen Arbeitsposition des Abscheideelements.

In weiterer Ausgestaltung der Erfindung ist der Abscheidefläche wenigstens abschnittsweise eine Beschichtung aus einem Hilfsmaterial zugeordnet, das chemisch und/oder physikalisch mit gewissen Partikeln interagiert.

Das Hilfsmaterial weist feste, flüssige und/oder pastöse Teilchen auf, die als Beschichtung auf der Abscheidefläche angeordnet sind und die Abscheidefläche wenigstens abschnittsweise bedecken. Bevorzugt interagieren Teilchen des Hilfsmaterials und/oder Hilfsmaterial-Teilchen chemisch und/oder physikalisch mit der Abscheidefläche und/oder mit Partikeln des Rohgasstroms. Die Teilchen des Hilfsmaterials fungieren dabei als Trennschicht zwischen der Abscheidefläche und den Partikeln des Rohgasstroms. Damit kann eine Berührung zwischen Partikeln des Rohgasstroms und der Abscheidefläche und/oder ein direkter Kontakt von Partikeln des Rohgasstroms mit der Abscheidefläche eingeschränkt oder sogar unterbunden werden.

Alternativ oder zusätzlich kann als Beschichtung auch eine metallische, keramische, anorganische und/oder organische Schicht vorgesehen sein. Eine solche Schicht kann beispielsweise über eine physikalische und/oder chemische Abscheidung aus einer Gasphase (Physical Vapour Deposition bzw. Chemical Vapour Deposition) auf die Abscheidefläche aufgebracht worden sein. Eine solche Schicht kann eine Berührung zwischen Partikeln des Rohgasstroms und der Abscheidefläche und/oder einen direkten Kontakt von Partikeln des Rohgasstroms mit der Abscheidefläche einschränken oder sogar unterbinden.

Der Vorabscheider umfasst optional eine Regenerierungsvorrichtung mit einem Hilfsmaterialsystem. Das Hilfsmaterialsystem dient dem Aufbringen von Hilfsmaterial auf eine Abscheidefläche.

In weiterer Ausgestaltung der Erfindung ist eine Beschichtung der Abscheidefläche aus einem Hilfsmaterial gebildet, das ein ferromagnetisches Material umfasst, und der Vorabscheider weist eine Magnetspule und/oder einen Permanentmagneten auf für ein kontinuierliches oder intervallweises Anlegen eines magnetischen Felds an der Abscheidefläche.

Ein ferromagnetisches Material als Bestandteil des Hilfsmaterials umfasst beispielsweise ein ferromagnetisches Pulver wie Eisenpulver, Magnetitpulver, Kobaltpulver und/oder Ferritpulver.

Alternativ oder zusätzlich umfasst ein solches ferromagnetisches Material ein Ferrofluid. Bei einem Ferrofluid kann es sich um eine kolloidale Suspension aus Eisen, Magnetit, Kobalt und/oder Ferrit in Öl, Wasser und/oder Wachs handeln.

Ferromagnetische Bestandteile eines ferromagnetischen Materials können durch ein Magnetfeld beeinflusst werden. Ferromagnetische Bestandteile können durch ein Magnetfeld insbesondere bewegt, verschoben, verlagert, ausgerichtet, fixiert und/oder positioniert werden.

Die Magnetspule und/oder der Permanentmagnet bilden ein Magnetfeld aus, das auf magnetisierbare Stoffe, Teilchen und/oder Partikel einwirken kann. An einer Magnetspule wird eine elektrische Spannung angelegt, um die erforderlichen elektrischen Ströme bereitzustellen. Die bei der Ausbildung des Magnetfelds auftretenden magnetischen Kräfte können die Haftung des Hilfsmaterials an der Abscheidefläche begünstigen.

In weiterer Ausgestaltung der Erfindung weist der Vorabscheider eine Regenerierungsvorrichtung mit einem Abreinigungssystem auf, das zumindest einen Teil der an einer Abscheidefläche eines Abscheideelements abgeschiedenen Partikel, zumindest einen Teil eines an einer Abscheidefläche eines Abscheideelements abgeschiedenen Hilfsmaterials und/oder zumindest einen Teil eines an einer Abscheidefläche eines Abscheideelements abgeschiedenen Systems aus Partikeln und Hilfsmaterial von der Abscheidefläche des Abscheideelements entfernt.

Das Abreinigungssystem dient erfindungsgemäß zur Entfernung von Partikeln, Hilfsmaterial und/oder Systemen aus Partikeln und Hilfsmaterial. Dabei kommen bevorzugt mechanische, pneumatische, hydraulische, elektrische, magnetische, chemische und/oder physikalische Verfahrensschritte zur Anwendung, zum Beispiel Abstreifen, Abspülen und/oder Abblasen. Nach der Entfernung der Partikel, des Hilfsmaterials und/oder der Systeme aus Partikeln und Hilfsmaterial von der Abscheidefläche kann erneut Hilfsmaterial, beispielsweise noch nicht erschöpftes, aufnahmefähiges, aufbereitetes, frisches und/oder unverbrauchtes Hilfsmaterial, auf die Abscheidefläche aufgebracht werden.

Ein System aus Partikeln und Hilfsmaterial umfasst bevorzugt chemisch und/oder physikalisch aneinander gebundene Partikel und Hilfsmaterial. Eine chemische Bindung zwischen den beiden Komponenten kann zum Beispiel durch eine chemische Reaktion erfolgen. Eine physikalische Bindung kann beispielsweise durch Van-der-Waals-Kräfte erfolgen. Die Bindung der Partikel an das Hilfsmaterial kann ein Verkleben von Oberflächen, insbesondere der Abscheideflächen, im Vorabscheider reduzieren und/oder verhindern.

Erschöpftes und/oder verbrauchtes Hilfsmaterial kann in einer Aufbereitungsanlage aufbereitet werden, um anschließend als frisches und/oder aufbereitetes Hilfsmaterial erneut der Regenerierungsvorrichtung zugeführt zu werden. In einer Aufbereitungsanlage können mechanische und/oder thermische Verfahrensschritte zur Verwendung kommen.

Eine mechanische Aufbereitung kann beispielsweise in einer Mühle erfolgen, in der ein System aus Partikeln und Hilfsmaterial gemahlen wird. Dabei kann eine mittlere Teilchengröße reduziert werden.

Eine thermische Aufbereitung kann beispielsweise in einem Wirbelschichtofen, einem Wirbelschichttrockner und/oder einem Drehrohrofen erfolgen. Dabei werden bestimmte Bestandteile des Systems aus Partikeln und Hilfsmaterial getrocknet und/oder thermisch zersetzt.

Ein Strömungsleitelement ist als Fläche ausgebildet, die einen auf die Fläche auftreffenden Rohgasstrom in eine bestimmte Richtung lenkt.

Das Strömungsleitelement ist vorzugsweise an einer Stelle angeordnet, die der Rohgasstrom passiert, wenn er eine Hauptdurchströmungsrichtung beibehält.

Das Strömungsleitelement ist bevorzugt in einem Winkel von 0° bis 180° zur Hauptdurchströmungsrichtung angeordnet.

Das Strömungsleitelement beeinflusst die Strömungsrichtung des Rohgasstroms und wirkt, insbesondere bei Anordnung in einem Winkel von 45° bis 135° zur Hauptdurchströmungsrichtung, besonders bevorzugt bei Anordnung in einem Winkel von ungefähr 90° zur Hauptdurchströmungsrichtung, optional als Schikane und/oder Prallblech.

Die in Hauptdurchströmungsrichtung hintereinander angeordneten Abscheideflächen von zwei benachbarten Abscheideelementen werden vom Rohgasstrom nacheinander überstrichen und bewirken eine mehrfache Ablenkung des Rohgasstroms von der Hauptdurchströmungsrichtung. Eine Ablenkung eines Partikel enthaltenden Rohgasstroms von einer ursprünglichen Strömungsrichtung bewirkt über Massenträgheit ein Abscheiden von Partikeln aus diesem Rohgasstrom. Eine mehrfache Umlenkung des Rohgasstroms erhöht den Wirkungsgrad der Abscheidevorrichtung und/oder des Vorabscheiders, insbesondere den Abscheidegrad der Abscheidevorrichtung und/oder des Vorabscheiders.

In weiterer Ausgestaltung der Erfindung weist die Abscheidevorrichtung einen Hauptabscheider auf, der zumindest einen Teil der Partikel, die den Vorabscheider passiert haben, aus dem Rohgasstrom abscheidet, wobei der Hauptabscheider als Faltkartonfilter ausgestaltet ist und ein gefaltetes Kartonelement umfasst.

Der Hauptabscheider ist in der Hauptdurchströmungsrichtung stromabwärts vom Vorabscheider angeordnet. Der Rohgasstrom durchströmt beim Passieren der Abscheidevorrichtung zunächst den Vorabscheider und danach den Hauptabscheider.

Der Faltkartonfilter umfasst ein faltbares und/oder gefaltetes Kartonelement, das aus einem Kartonmaterial gebildet ist und das beispielsweise ein Außenelement und ein Innenelement aufweist.

Das Außenelement bildet eine Hülle, die das Innenelement umhüllen, insbesondere in sich aufnehmen, kann. Das Außenelement weist vorzugsweise eine Einlass- und eine Auslassöffnung auf, durch die der Rohgasstrom in den Faltkartonfilter eintreten und aus diesem wieder austreten kann.

Das Innenelement umfasst einen Wandabschnitt, der partiell mit Durchtritts- und/oder Umlenköffnungen versehen ist. Partikel, die im Rohgasstrom enthalten sind, werden aus einem den Faltkartonfilter passierenden Rohgasstrom an einem als Abscheidefläche wirkenden geschlossenen Teilbereich eines Wandabschnitts abgeschieden.

Das Innenelement kann optional mehrere Abscheideflächen aufweisen. Die mehreren Abscheideflächen können gleich oder voneinander verschieden ausgebildet sein sowie im gleichen oder in verschiedenen Winkeln zur Hauptdurchströmungsrichtung in dem Faltkartonfilter positioniert sein. Damit können eine Richtung, in die ein Rohgasstrom abgelenkt wird, und/oder eine Geschwindigkeit, mit der der Rohgasstrom den Faltkartonfilter passiert, beeinflusst werden.

Die Beeinflussung von Richtung und Geschwindigkeit des Rohgasstroms wirkt sich auf den Abscheidegrad des Faltkartonfilters aus. Insbesondere können ein höherer Grad an Umlenkung und/oder eine höhere Anzahl an Umlenkungen den Abscheidegrad des Faltkartonfilters erhöhen.

Alternativ zu einem Kartonelement, das ein Außenelement und ein Innenelement aufweist, kann ein Kartonelement auch einteilig, dreiteilig und/oder mehrteilig ausgebildet sein. Beispielsweise kann das Kartonelement ein Wannenelement umfassen, das ein Außenelement des Kartonelements aufnehmen kann. Das Wannenelement kann dabei insbesondere die Stabilität des Kartonelements erhöhen und/oder aus dem Inneren des Kartonelements austretende Flüssigkeiten aufnehmen.

Alternativ oder zusätzlich kann ein Kartonelement aus mehreren, unterschiedlich konfigurierten und/oder unterschiedlich konfigurierbaren Innenelementen gebildet sein.

Alternativ oder zusätzlich zu einem Kartonmaterial können in einem Hauptabscheider ein Kunststoffmaterial, ein Holzmaterial und/oder ein faserförmig ausgestaltetes Material zum Einsatz kommen. Ein Holzmaterial dient vorzugsweise dazu, den Hauptabscheider zu stabilisieren und/oder zu verstärken.

In weiterer Ausgestaltung der Erfindung weisen mehrere Abscheideelemente eine bezüglich der Hauptdurchströmungsrichtung unterschiedliche Tiefenposition auf, wobei Rotationsachsen von Abscheideelementen, die eine unterschiedliche Tiefenposition aufweisen, in zwei oder mehr unterschiedlichen, zueinander beabstandet angeordneten und die Abscheidevorrichtung schneidenden Hilfsebenen liegen.

Bevorzugt kreuzt und/oder schneidet die Bahn des Rohgasstroms beim Passieren der Abscheidevorrichtung zunächst eine primäre Hilfsebene und anschließend wenigstens eine sekundäre, von der primären Hilfsebene beabstandete Hilfsebene.

Insbesondere können Abscheideelemente, die in derselben Hilfsebene angeordnet sind, gemeinsam und/oder gleichzeitig verstellbar ausgestaltet sein. Ein Verstellen kann eine Verlagerung in Längsrichtung und/oder in Querrichtung zur Hauptdurchströmungsrichtung bewirken. Damit kann ein Abstand zwischen den Abscheideelementen verändert, insbesondere vergrößert oder verringert, werden.

Alternativ oder zusätzlich können auch Abscheideelemente, die in unterschiedlichen Hilfsebenen angeordnet sind, gemeinsam und/oder gleichzeitig verstellbar ausgestaltet sein. Die in der Abscheidevorrichtung angeordneten Hilfsebenen weisen bevorzugt eine vertikale Ausrichtung auf und sind vorzugsweise parallel zueinander positioniert.

In weiterer Ausgestaltung der Erfindung umfasst der Vorabscheider mindestens zwei Abscheideelemente, wobei jedem Abscheideelement mindestens zwei Abscheideflächen zugeordnet sind, an denen feste, flüssige und/oder pastöse Partikel aus dem Rohgasstrom abgeschieden werden können. Die Abscheideflächen sind dabei zeit- und/oder abschnittsweise mit einem Hilfsmaterial beschichtet, das chemisch und/oder physikalisch mit gewissen Partikeln aus dem Rohgasstrom interagiert. Ein Abscheideelement ist mittels einer Antriebseinheit um eine Rotationsachse drehbar ausgestaltet, um das Abscheideelement zwischen mehreren Arbeitspositionen zu verstellen, wobei in einer ersten Arbeitsposition des Abscheideelements eine Abscheidefläche dieses Abscheideelements sich in einer Abscheidestellung befindet, während gleichzeitig eine andere Abscheidefläche desselben Abscheideelements sich in einer Regenerierungsstellung befindet. Eine sich in einer Abscheidestellung befindende Abscheidefläche eines Abscheideelements wirkt dabei als Strömungsleitelement, das in den Strömungsweg des Rohgasstroms hineinragt. Der Vorabscheider weist eine Regenerierungsvorrichtung mit einem Abreinigungssystem auf, das zumindest einen Teil der an einer Abscheidefläche eines Abscheideelements abgeschiedenen Partikel, zumindest einen Teil des an einer Abscheidefläche eines Abscheideelements abgeschiedenen Hilfsmaterials und/oder zumindest einen Teil des an einer Abscheidefläche eines Abscheideelements abgeschiedenen Systems aus Partikeln und Hilfsmaterial von der Abscheidefläche des Abscheideelements entfernt.

Ein Vorabscheider, der ein Abscheideelement mit je mindestens zwei Abscheideflächen aufweist, ermöglicht gleichzeitig einen Abscheidebetrieb sowie einen Regenerierungsbetrieb einer Abscheidevorrichtung. Dadurch kann in einem Arbeitsbereich ein Werkstück beschichtet werden, und die dabei vom Rohgasstrom aufgenommenen Partikel können an einer Abscheidefläche eines Abscheideelements aus dem Rohgasstrom abgeschieden werden, während gleichzeitig Partikel, Hilfsmaterial und/oder Systeme aus Partikeln und Hilfsmaterial von einer anderen Abscheidefläche des Abscheideelements entfernt werden. Das Hilfsmaterial bedeckt eine Abscheidefläche, trennt die Abscheidefläche von den auftreffenden Partikeln, schützt dabei die Abscheidefläche und erhöht dadurch die Standzeit des Vorabscheiders.

Die vorliegende Erfindung betrifft des Weiteren eine Anlage zur Behandlung, insbesondere zum Beschichten oder Verarbeiten von Werkstücken, die eine Abscheidevorrichtung zum Abscheiden von Partikeln aus einem Rohgasstrom aufweist, wobei im Rohgasstrom ein Anteil fester, flüssiger und/oder pastöser Partikel mitführbar ist. Eine Anlage zum Verarbeiten von Werkstücken kann beispielsweise eine Schweißanlage, eine Zerspanungsanlage und/oder eine Gießereianlage umfassen. Der Rohgasstrom passiert die Abscheidevorrichtung in einer Hauptdurchströmungsrichtung, und weist einen Hauptabscheider auf, der wenigstens einen Teil der Partikel aus dem Rohgasstrom abscheidet, wobei der Rohgasstrom den Hauptabscheider in der Hauptdurchströmungsrichtung durchströmt und als Reingasstrom aus dem Hauptabscheider austritt.

Der vorliegenden Erfindung liegt des Weiteren die Aufgabe zugrunde, eine Anlage zur Oberflächenbehandlung bereit zu stellen, die eine Abscheidevorrichtung umfasst, deren Hauptabscheider eine hohe Standzeit aufweist. Eine solche Anlage zur Oberflächenbehandlung soll außerdem günstig betreibbar sein.

Zur Lösung der Aufgabe wird erfindungsgemäß eine gattungsgemäße Anlage zur Behandlung, insbesondere zum Beschichten oder Verarbeiten von Werkstücken, mit einer Abscheidevorrichtung zum Abscheiden von Partikeln vorgeschlagen, die einen Vorabscheider zum Abscheiden wenigstens eines Teils der Partikel aus dem Rohgasstrom aufweist, der derart stromaufwärts zum Hauptabscheider angeordnet ist, dass der Rohgasstrom in der Hauptdurchströmungsrichtung zuerst den Vorabscheider und nachfolgend den Hauptabscheider durchströmt.

Eine Anlage zur Oberflächenbehandlung ist bevorzugt als Beschichtungsanlage zum Beschichten von Werkstücken ausgebildet.

In einer solchen Anlage zum Beschichten von Werkstücken mit einem Beschichtungsmaterial wird ein Gasstrom durch einen Arbeitsbereich geführt. Der Gasstrom nimmt Partikel des Beschichtungsmaterials auf und tritt als Partikel enthaltender Rohgasstrom aus dem Arbeitsbereich aus. Durch das Entfernen von Partikeln aus dem Arbeitsbereich wird die Anzahl an Partikeln reduziert, die an Stellen des Werkstücks und/oder des Arbeitsbereichs abgeschieden werden, die zumindest weitgehend frei von Partikeln sein sollen.

Der Gasstrom wird vor dem Eintritt in den Arbeitsbereich mittels einer Konditioniervorrichtung beispielsweise hinsichtlich Temperatur und Wassergehalt konditioniert. Ein solcher Konditioniervorgang begünstigt ein gleichbleibendes Beschichtungsergebnis beim Beschichten von Werkstücken.

Das Konditionieren eines Gasstroms ist ein energieintensiver Vorgang. Die Konditionen eines von außerhalb der Anlage zugeführten Gasstroms weichen mehr oder weniger stark von den Konditionen ab, die ein Gasstrom für das Erzielen eines gleichbleibenden Beschichtungsergebnisses aufweisen sollte. Ein Konditioniervorgang erfordert daher für einen Gasstrom, der zuvor bereits konditioniert worden war, im Allgemeinen einen geringeren Energieaufwand als für einen Gasstrom, der der Anlage von außen zugeführt wird. Aus diesem Grund ist es von Vorteil, wenn ein Gasstrom, der den Arbeitsbereich passiert hat und der für diesen Zweck zuvor bereits konditioniert worden war, erneut dem Arbeitsbereich zugeführt werden kann.

Bevor ein Gasstrom, der in einem Arbeitsbereich Partikel aufgenommen hat und als Rohgasstrom aus dem Arbeitsbereit ausgetreten ist, erneut einem Arbeitsbereich zugeführt werden kann, ist es erforderlich, wenigstens einen Teil der Partikel aus dem Gasstrom zu entfernen. Damit wird vorzugsweise die Zahl an Partikeln reduziert, die nach dem erneuten Zuführen zum Arbeitsbereich an Stellen des Werkstücks und/oder des Arbeitsbereiches abgeschieden werden, die frei von Partikeln bleiben sollen. Hierfür ist eine Abscheidevorrichtung zum Abscheiden von Partikeln geeignet, die einen Hauptabscheider und einen stromaufwärts zum Hauptabscheider angeordneten Vorabscheider aufweist.

Die vorliegende Erfindung betrifft des Weiteren ein Verfahren zum Abscheiden von Partikeln aus einem Rohgasstrom, vorzugsweise in einer Anlage zur Behandlung von Werkstücken.

Der vorliegenden Erfindung liegt des Weiteren die Aufgabe zugrunde, ein Verfahren zum Abscheiden von Partikeln aus einem Rohgasstrom bereit zu stellen, das effizient durchführbar ist.

Diese Aufgabe wird erfindungsgemäß gelöst durch ein Verfahren zum Abscheiden von Partikeln aus einem Rohgasstrom mit Hilfe einer Abscheidevorrichtung, bei dem der Rohgasstrom in einem ersten Verfahrensschritt durch einen Vorabscheider und in einem zweiten Verfahrensschritt durch einen stromabwärts zum Vorabscheider angeordneten Hauptabscheider strömt. Beim Durchströmen des Vorabscheiders wird die Strömungsrichtung des Rohgasstroms wenigstens zeitweise von einer Hauptdurchströmungsrichtung abgelenkt. Infolge von Massenträgheitseffekten wird dabei wenigstens ein Teil der Partikel aus dem den Vorabscheider durchströmenden Rohgasstrom an einer Abscheidefläche eines Abscheideelements abgeschieden. Das Abscheideelement umfasst eine Welle sowie ein Radialflächenelement, das radial von der Welle abstehend an der Welle angeordnet ist, wobei die Abscheidefläche an dem Radialflächenelement angeordnet ist. Der Rohgasstrom durchströmt einen Bereich im Vorabscheider, in dem sich die Außenkonturen zweier zueinander benachbart angeordneter Abscheideelemente schneiden und der durch einen Abstand zwischen Abscheideflächen zweier zueinander benachbart angeordneter Abscheideelemente gebildet ist. Die Außenkontur eines Abscheideelements ist bevorzugt die Oberfläche eines fiktiven näherungsweise zylinderförmig und/oder prismenförmig ausgebildeten Körpers. Ein Abscheideelement wird um eine Rotationsachse gedreht, sodass eine Abscheidefläche des Abscheideelements, die vor der Drehung um die Rotationsachse der Hauptdurchströmungsrichtung zugewandt war und vom Rohgasstrom angeströmt wurde, nach der Drehung um die Rotationsachse von der Hauptdurchströmungsrichtung abgewandt ist.

Der Rohgasstrom nimmt in einem Arbeitsbereich, beispielsweise in einer Lackierkabine, Partikel auf und trägt diese vom Werkstück weg und aus dem Arbeitsbereich fort.

Bei den Partikeln kann es sich um Lackoverspray-Teilchen handeln, die das zu lackierende Werkstück beim Lackiervorgang verfehlen. Der Rohgasstrom tritt aus dem Arbeitsbereich aus und durchströmt die Abscheidevorrichtung, die einen Vorabscheider und einen Hauptabscheider aufweist.

Beim Durchströmen des Vorabscheiders wird wenigstens ein Teil der Partikel aus dem Rohgasstrom im Vorabscheider abgeschieden.

Der Rohgasstrom trifft auf die Abscheidefläche eines Abscheideelements und wird von seiner ursprünglichen Strömungsrichtung, vorzugsweise der Hauptdurchströmungsrichtung, abgelenkt. Die im Rohgasstrom enthaltenen Partikel kollidieren dabei mit der Abscheidefläche und bleiben wenigstens zum Teil an dieser haften und/oder hängen.

Wenigstens ein Teil der Partikel, die den Vorabscheider passieren, wird im nachfolgenden Hauptabscheider abgeschieden.

Optional kann der Rohgasstrom in einem dritten Verfahrensschritt einen Nachabscheider durchströmen, der wenigstens einen Teil der Partikel aus dem Rohgasstrom entfernt, die den Vorabscheider und/oder den Hauptabscheider passiert haben.

In weiterer Ausgestaltung der Erfindung passiert wenigstens ein Teil des Rohgasstroms eine Durchlassöffnung eines Abscheideelements, wobei wenigstens ein Teil der Partikel an dem Abscheideelement abgeschieden wird.

Dabei wird bevorzugt wenigstens ein Teil der Partikel an einem Radialflächenelement und/oder an einer Abscheidefläche abgeschieden.

Alternativ oder zusätzlich erfolgt eine Abscheidung von wenigstens einem Teil der Partikel an oder in einer Durchlassöffnung.

Ein Rohgasstrom enthält nach dem Durchströmen einer Durchlassöffnung bevorzugt weniger Partikel als vorher.

Das Abscheideelement kann mehrere Arbeitspositionen einnehmen. In einer ersten Arbeitsposition des Abscheideelements kollidieren gewisse Partikel mit der Abscheidefläche. In einer zweiten Arbeitsposition ist die Abscheidefläche derart angeordnet, dass eine Kollision des Rohgasstroms und/oder von Partikeln mit der Abscheidefläche weitgehend ausbleiben.

Das Drehen um die Rotationsachse bewirkt ein Verstellen des Abscheideelements zwischen den Arbeitspositionen.

Beim Verstellen des Abscheideelements von der ersten Arbeitsposition in die zweite Arbeitsposition wird die Abscheidefläche räumlich derart verlagert, dass nach dem Verstellen eine Kollision des Rohgasstroms und/oder der Partikel mit dieser Abscheidefläche weitgehend ausbleibt.

In weiterer Ausgestaltung der Erfindung werden an einer Abscheidefläche eines Abscheideelements Partikel aus dem Rohgasstrom abgeschieden, während gleichzeitig eine andere Abscheidefläche desselben Abscheideelements einem Regenerierungsvorgang unterzogen und dabei regeneriert wird. Der Regenerierungsvorgang umfasst vorzugsweise mehrere Einzelschritte. In einem ersten Arbeitsschritt wird wenigstens ein Teil der Partikel, des Hilfsmaterials und/oder des Systems aus Partikeln und Hilfsmaterial von einer Abscheidefläche eines Abscheideelements entfernt. In einem optionalen zweiten Arbeitsschritt wird dieselbe Abscheidefläche desselben Abscheideelements mit frischem und/oder aufbereitetem Hilfsmaterial beschichtet.

Der Regenerierungsvorgang dient dazu, eine Abscheidefläche nach einem oder mehreren Abscheidevorgängen und/oder Abscheidezyklen in einen Zustand zu versetzen, in dem erneut ein Abscheiden von Partikeln an dieser Abscheidefläche erfolgen kann.

Dazu wird in einem ersten Einzelschritt die Abscheidefläche gereinigt, indem die darauf abgeschiedenen Partikel, das darauf abgeschiedene Hilfsmaterial und/oder das darauf abgeschiedene System aus Partikeln und Hilfsmaterial beispielsweise mechanisch mit einer Rakel und/oder einem Abreinigungsstempel und/oder physikalisch mit einem Fluid von der Abscheidefläche entfernt werden.

Alternativ oder zusätzlich können Partikel, Hilfsmaterial und/oder das System aus Partikeln und Hilfsmaterial mit Hilfe einer Strahlvorrichtung von der Abscheidefläche entfernt werden. Dabei wird mittels einer Düse ein Teilchen- und/oder Gasstrahl auf die Abscheidefläche gerichtet. Mittels Impulsübertragung wird die kinetische Energie der Bestandteile des Teilchen- und/oder Gasstrahls auf Partikel, Hilfsmaterial und/oder das System aus Partikeln und Hilfsmaterial übertragen.

Alternativ oder zusätzlich können Partikel, Hilfsmaterial und/oder das System aus Partikeln und Hilfsmaterial von der Abscheidefläche entfernt werden, indem ein Magnetfeld abgeschaltet und/oder verändert wird, das zuvor an die Abscheidefläche angelegt wurde, um ein Haften eines Hilfsmaterials zumindest vorübergehend zu begünstigen.

In einem optionalen zweiten Einzelschritt wird beispielsweise über dieselbe oder eine andere Düse noch aufnahmefähiges, aufbereitetes und/oder frisches Hilfsmaterial auf die Abscheidefläche aufgebracht.

Dadurch, dass das Abscheiden von Partikeln auf einer Abscheidefläche und das Regenerieren einer anderen Abscheidefläche eines Abscheideelements gleichzeitig möglich sind, weist die Abscheidevorrichtung eine hohe Standzeit auf und die Anlage kann wahlweise kontinuierlich betrieben werden.

Der vorliegenden Erfindung liegt des Weiteren die Aufgabe zugrunde, eine Abscheidevorrichtung bereitzustellen, deren Hauptabscheider eine hohe Standzeit aufweist. Eine solche Abscheidevorrichtung soll außerdem günstig betreibbar sein.

Zur Lösung der Aufgabe wird erfindungsgemäß eine gattungsgemäße Abscheidevorrichtung zum Abscheiden von Partikeln aus einem Rohgasstrom vorgeschlagen, die einen Vorabscheider zum Abscheiden wenigstens eines Teils der Partikel aus dem Rohgasstrom aufweist, der derart stromaufwärts zum Hauptabscheider angeordnet ist, dass der Rohgasstrom in der Hauptdurchströmungsrichtung zuerst den Vorabscheider und nachfolgend den Hauptabscheider durchströmt. Die Abscheidevorrichtung weist einen Hauptabscheider auf, der zumindest einen Teil der Partikel, die den Vorabscheider passiert haben, aus dem Rohgasstrom abscheidet, wobei der Hauptabscheider als Faltkartonfilter ausgestaltet ist und ein gefaltetes Kartonelement umfasst. Der Rohgasstrom enthält nach Durchströmen der Abscheidevorrichtung bevorzugt eine geringere Anzahl an Partikeln als vor dem Eintritt in die Abscheidevorrichtung. Ein derart gereinigter Rohgasstrom wird als Reingasstrom bezeichnet und kann insbesondere zumindest teilweise erneut einem Arbeitsbereich zugeführt werden, um dort Partikel aufzunehmen.

Beim Rohgasstrom handelt es sich um einen Gasstrom, insbesondere um einen Luftstrom, der zumindest zeitweise gewisse Partikel mit sich führt. Der Gasstrom wird beispielsweise in einem Arbeitsbereich mit solchen Partikeln beladen und strömt als Rohgasstrom vom Arbeitsbereich zur Abscheidevorrichtung und durch diese hindurch. In der Abscheidevorrichtung wird der Rohgasstrom entladen, gereinigt und/oder recycliert. Dabei werden Partikel aus dem Rohgasstrom entfernt.

Nachdem der Rohgasstrom entladen, gereinigt und/oder recycliert worden ist, strömt er zunächst als Reingasstrom von der Abscheidevorrichtung in eine optional vorhandene Konditioniervorrichtung und anschließend als Gasstrom in den Arbeitsbereich, um dort erneut Partikel aufzunehmen. Ein Reingasstrom und/oder ein Gasstrom weisen insbesondere eine geringere Anzahl an Partikeln auf als der Rohgasstrom. Optional enthalten der Reingasstrom und/oder der Gasstrom nach Durchströmen der Abscheidevorrichtung keine solchen Partikel mehr, die im Arbeitsbereich in den Rohgasstrom gelangt sind.

Die im Rohgasstrom enthaltenen Partikel umfassen festes, gasförmiges, flüssiges und/oder pastöses Material und/oder ein Stoffgemisch. Feste, flüssige und/oder pastöse Partikel bilden zusammen mit dem Gasstrom ein Aerosol. Bei Partikeln handelt es sich insbesondere um Lackoverspray-Teilchen, bevorzugt um Tröpfchen, die beim Applizieren einer Flüssigkeit auf ein im Arbeitsbereich angeordnetes Werkstück in den Gasstrom und/oder den Rohgasstrom gelangen.

Die Partikel werden vom Gasstrom und/oder vom Rohgasstrom vorzugsweise mitgenommen und in Strömungsrichtung räumlich verlagert. Mittels der Abscheidevorrichtung wird wenigstens ein Teil der Partikel aus dem Gasstrom und/oder dem Rohgasstrom entfernt.

Die Abscheidevorrichtung weist einen Vorabscheider sowie einen Hauptabscheider auf und entfernt Partikel aus dem Rohgasstrom, insbesondere solche Partikel, die in einem Arbeitsbereich von einem Gasstrom, einem Reingasstrom und/oder vom Rohgasstrom aufgenommen worden sind.

Optional weist die Abscheidevorrichtung zusätzlich zu einem Vorabscheider und einem Hauptabscheider einen Nachabscheider auf, der Partikel abscheiden kann, die den Vorabscheider und den Hauptabscheider passiert haben.

Ein Arbeitsbereich umfasst beispielsweise eine Lackierkabine, in der ein Werkstück lackiert wird, und wird von einem Gasstrom durchströmt.

Der Rohgasstrom enthält nach Durchströmen der Abscheidevorrichtung bevorzugt eine geringere Anzahl an Partikeln als vor dem Eintritt in die Abscheidevorrichtung. Optional enthält der Rohgasstrom nach Durchströmen der Abscheidevorrichtung keine Partikel mehr, vorzugsweise keine solchen Partikel mehr, die im Arbeitsbereich in den Rohgasstrom gelangt sind. Ein derart gereinigter Rohgasstrom wird als Reingasstrom bezeichnet und kann insbesondere zumindest teilweise erneut einem Arbeitsbereich, insbesondere demselben oder einem oder mehreren anderen Arbeitsbereichen, zugeführt werden, um dort Partikel aufzunehmen.

Der Hauptabscheider ist vorzugsweise als Einweg-System, als Mehrweg-System und/oder als Dauerfilter ausgebildet. Der Hauptabscheider umfasst zum Beispiel ein keramisches, ein metallisches und/oder ein polymeres Material mit einer Gitterstruktur und/oder mit poröser Konsistenz. Der Hauptabscheider scheidet im Rohgasstrom enthaltene Partikel wenigstens teilweise, vorzugsweise vollständig, aus dem Rohgasstrom ab. Ein Gasstrom tritt dabei als Rohgasstrom in den Hauptabscheider ein, passiert diesen und tritt als Rohgasstrom und/oder als Reingasstrom aus dem Hauptabscheider aus. Optional wird ein Reingasstrom dem Arbeitsbereich anschließend erneut zugeführt.

Der Vorabscheider ist stromaufwärts zum Hauptabscheider angeordnet und scheidet wenigstens einen Teil der im Rohgasstrom enthaltenen Partikel aus dem Rohgasstrom ab. Bei Verwendung einer Abscheidevorrichtung, die einen Vorabscheider und einen Hauptabscheider aufweist, ist der Anteil an Partikeln im Rohgasstrom bei Eintritt des Rohgasstroms in den Hauptabscheider vorzugsweise geringer als bei Verwendung einer Abscheidevorrichtung ohne Vorabscheider. Damit wird eine Belastung des Hauptabscheiders reduziert.

Als Hauptdurchströmungsrichtung ist eine Richtung definiert, in der der Rohgasstrom die Abscheidevorrichtung im Wesentlichen passiert. Vorzugsweise sind der Vorabscheider und der Hauptabscheider derart angeordnet, dass der Rohgasstrom in Hauptdurchströmungsrichtung zunächst den Vorabscheider und nachfolgend den Hauptabscheider passiert.

Bevorzugt sind der Vorabscheider und der Hauptabscheider auf einer Achse angeordnet, die im Wesentlichen parallel zur Hauptdurchströmungsrichtung ausgerichtet ist.

Eine Abscheidevorrichtung kann eine oder mehrere Hauptdurchströmungsrichtungen aufweisen, denen der Rohgasstrom wenigstens zeitweise folgt. Beispielsweise kann eine Hauptdurchströmungsrichtung eines Vorabscheiders von einer Hauptdurchströmungsrichtung eines Hauptabscheiders verschieden sein.

Alternativ oder zusätzlich können der Abscheidevorrichtung neben einer oder mehreren Hauptdurchströmungsrichtungen eine oder mehrere Nebenströmungsrichtungen zugeordnet sein, denen der Rohgasstrom beim Passieren der Abscheidevorrichtung wenigstens zeit- und/oder abschnittsweise folgt.

Eine mittlere Strömungsrichtung des Rohgasstroms beim Passieren der Abscheidevorrichtung entspricht im Wesentlichen der Hauptdurchströmungsrichtung.

In den Zeichnungen zeigen
- Fig. 1: eine perspektivische Darstellung eines Abschnitts einer Anlage zum Beschichten von Karossen mit einem ersten Ausführungsbeispiel einer Abscheidevorrichtung;
- Fig. 2: in einer schematischen Darstellung einen Querschnitt durch ein erstes Ausführungsbeispiel einer Abscheidevorrichtung an der Stelle II von Fig. 1;
- Fig. 3: eine perspektivische Darstellung eines Vorabscheiders;
- Fig. 4: in einer schematischen Darstellung einen Schnitt durch einen Vorabscheider an der Stelle IV von Fig. 2;
- Fig. 5: in einer schematischen Darstellung eine ausschnittsweise Ansicht von Fig. 4;
- Fig. 6: ein Verfahrensfließbild zu einer Beschichtungsanlage mit einer Abscheidevorrichtung gemäß erstem Ausführungsbeispiel;
- Fig. 7: eine perspektivische Darstellung eines zweiten Ausführungsbeispiels einer Abscheidevorrichtung;
- Fig. 8: in einer schematischen Darstellung einen Schnitt durch einen Prallabscheider an der Stelle VIII von Fig. 7;
- Fig. 9: eine perspektivische Darstellung eines dritten Ausführungsbeispiels einer Abscheidevorrichtung;
- Fig. 10: in einer schematischen Darstellung einen Schnitt durch einen Prallabscheider an der Stelle X von Fig. 9;
- Fig. 11: in einer schematischen Darstellung eine Schnittansicht eines vierten Ausführungsbeispiels einer Abscheidevorrichtung;
- Fig. 12: in einer schematischen Darstellung eine Schnittansicht eines fünften Ausführungsbeispiels einer Abscheidevorrichtung;
- Fig. 13: in einer schematischen Darstellung eine Schnittansicht eines sechsten Ausführungsbeispiels einer Abscheidevorrichtung;
- Fig. 14: eine perspektivische Darstellung eines siebten Ausführungsbeispiels einer Abscheidevorrichtung;
- Fig. 15a: in einer schematischen Darstellung eine Schnittansicht eines achten Ausführungsbeispiels einer Abscheidevorrichtung;
- Fig. 15b: eine perspektivische Darstellung von Elementen eines Faltkartonfilters.

Gleiche oder funktional äquivalente Elemente sind in sämtlichen Figuren mit denselben Bezugszeichen versehen.

Die Erfindung betrifft insbesondere eine wie in einem ersten Ausführungsbeispiel dargestellte Anlage zum Beschichten von Werkstücken 1 in Form von Karossen 6. Diese umfasst ein Luftführungssystem 2 sowie einen Arbeitsbereich (Lackierkabine 3). Benachbart zur Lackierkabine 3, insbesondere unterhalb, ist eine erfindungsgemäße Abscheidevorrichtung 4 vorgesehen. Das Luftführungssystem 2 führt einen Gasstrom 5 durch die Lackierkabine 3 und die Abscheidevorrichtung 4.

Das Luftführungssystem 2 umfasst einen Ventilator 7 sowie eine Konditioniervorrichtung 8. Der Ventilator 7 fördert den Gasstrom 5 durch die Lackierkabine 3 und die Abscheidevorrichtung 4. Wenigstens ein Teil des Gasstroms 5 wird außerdem durch die Konditioniervorrichtung 8 geführt und dabei im Hinblick auf Temperatur und/oder Feuchte konditioniert.

Die Lackierkabine 3 umfasst eine Fördervorrichtung 9 zum Fördern einer Karosse 6 sowie eine Applikationsvorrichtung 10 zum Applizieren von Lack auf eine Karosse 6. Beim Applizieren von Lack auf eine Karosse 6 gelangen feste, flüssige und/oder pastöse Partikel in Form von Lackoverspray-Teilchen 11 in den Gasstrom 5. Bei einem mit Lackoverspray-Teilchen 11 angereicherten Gasstrom 5 handelt es sich bevorzugt um einen Rohgasstrom 12.

Die Abscheidevorrichtung 4 weist einen Vorabscheider, einen Hauptabscheider und einen Nachabscheider auf. Der Rohgasstrom 12 passiert zunächst den Vorabscheider und danach nacheinander den Hauptabscheider sowie den Nachabscheider. Der Rohgasstrom 12 weist bei einem Eintritt in die Abscheidevorrichtung 4 eine höhere Zahl an Lackoverspray-Teilchen 11 auf als bei einem Austritt aus der Abscheidevorrichtung 4. Bei einem aus der Abscheidevorrichtung 4 austretenden Gasstrom 5 handelt es sich bevorzugt um einen Reingasstrom 36.

Der Vorabscheider ist als Prallabscheider 13 ausgestaltet und umfasst acht strukturell gleichartige Abscheideelemente 14, 15, 16, 17, 18, 19, 20, 21 sowie eine Regenerierungsvorrichtung 22. Außenkonturen benachbarter Abscheideelemente 14, 15, 16, 17, 18, 19, 20, 21 schneiden sich. Die Regenerierungsvorrichtung 22 wirkt zeitweise auf ein Abscheideelement und darauf abgeschiedene Lackoverspray-Teilchen 11 ein. Der Prallabscheider 13 weist außerdem mindestens zwei verschiedene, an einem Abscheideelement angeordnete Zonen auf, erstens eine Abscheidezone 23 sowie zweitens eine Regenerierungszone 24.

Ein erstes Abscheideelement 15 des Prallabscheiders 13 umfasst eine Welle 25 sowie acht strukturell gleichartige Radialflächenelemente 15a, 15b, 15c, 15d, 15e, 15f, 15g, 15h, die radial von der Welle 25 abstehend angeordnet sind. Ein (erstes) Radialflächenelement 15a weist zwei Abscheideflächen 15a' und 15a" auf. Ein zweites Radialflächenelement 15b weist entsprechend zwei Abscheideflächen 15b' und 15b" und ein drittes Radialflächenelement 15c zwei Abscheideflächen 15c' und 15c" auf. Analog dazu weisen die übrigen Radialflächenelemente des Abscheideelements ebenfalls jeweils zwei Abscheideflächen auf.

Die übrigen Abscheideelemente 14, 16, 17, 18, 19, 20, 21 sind gleich aufgebaut wie das erste Abscheideelement 15.

Die Abscheideflächen von zum ersten Abscheideelement 15 benachbarten Abscheideelementen 14,16 weisen einen Abstand zu den Abscheideflächen 15a', 15a",15b', 15b", 15c', 15c" des ersten Abscheideelements 15 auf.

Auf einer zentralen Längsachse der Welle 25 liegt eine Rotationsachse 26, um die das erste Abscheideelement 15 gedreht werden kann. Eine (erste) Antriebseinheit 27 steht in einer kraftschlüssigen Verbindung mit der Welle 25. Dadurch kann das erste Abscheideelement 15 seine Lage ändern und wenigstens zwei unterschiedliche Arbeitspositionen einnehmen.

Die stromabwärts eines Abscheideelements angeordnete Regenerierungsvorrichtung 22 umfasst ein Abreinigungssystem 29. Das Abreinigungssystem 29 dient dazu, Lackoverspray-Teilchen 11 von einer Abscheidefläche zu entfernen.

Das Abreinigungssystem 29 weist acht Abreinigungsstempel 30a, 30b, 30c, 30d, 30e, 30f, 30g, 30h auf, die an einer Trägervorrichtung 31 angeordnet sind. Außerdem umfasst das Abreinigungssystem 29 eine mit mindestens einem Abreinigungsstempel in einer Wirkverbindung stehende zweite Antriebseinheit 32 und einen Sammelbehälter 33. Der Sammelbehälter 33 ist unterhalb eines Abscheideelements angeordnet. Jedem der Abscheideelemente ist jeweils mindestens ein Abreinigungsstempel zugeordnet. Dem ersten Abscheideelement 15 ist beispielsweise ein erster Abreinigungsstempel 30b zugeordnet. Mittels der zweiten Antriebseinheit 32 kann ein Abreinigungsstempel von einer Ausgangsposition an eine Abscheidefläche heran geführt werden, sodass der Abreinigungsstempel partiell an dieser Abscheidefläche anliegt. Anschließend kann der Abreinigungsstempel mit Hilfe der zweiten Antriebseinheit 32 weitgehend parallel zu einer Rotationsachse entlang einer Abscheidefläche von oben nach unten bewegt werden.

Der Hauptabscheider ist als Filter-Vlies 34 ausgestaltet und stromabwärts zum Vorabscheider angeordnet. Das Filter-Vlies 34 umfasst eine Vielzahl von Faserelementen und ist aufgrund seiner porösen Struktur vom Gasstrom 5 und/oder vom Rohgasstrom 12 durchströmbar.
Der Nachabscheider ist als Taschenfilter 35 ausgestaltet und stromabwärts zum Hauptabscheider angeordnet.
In einem modifizierten Ausführungsbeispiel wird der Gasstrom nach dem Passieren des Hauptabscheiders einer Konditioniervorrichtung und anschließend erneut der Lackierkabine zugeführt. Ein Nachabscheider ist optional vorhanden.

Die Abscheidevorrichtung 4 nach Ausführungsbeispiel 1 funktioniert wie folgt.
Der Rohgasstrom 12 durchströmt in Hauptdurchströmungsrichtung 28 den Prallabscheider 13, wobei wenigstens ein Teil der im Rohgasstrom 12 enthaltenen Lackoverspray-Teilchen 11 abgeschieden wird. Zumindest ein Teilstrom des Rohgasstroms 12 passiert dabei das erste Abscheideelement 15 und dabei gleichzeitig den Bereich zwischen dem ersten Abscheideelement 15 und einem dazu benachbart angeordneten Abscheideelement 16, in dem sich die Außenkonturen der beiden Abscheideelemente 15, 16 schneiden.

In einer ersten Arbeitsposition des ersten Abscheideelements 15 ist eine erste, dem dritten Radialflächenelement 15c zugeordnete Abscheidefläche 15c" in der Abscheidezone 23 angeordnet und eine zweite, dem ersten Radialflächenelement 15a zugeordnete Abscheidefläche 15a" in der Regenerierungszone 24. In diesem Fall nimmt die erste Abscheidefläche 15c" eine Abscheidestellung ein und die zweite Abscheidefläche 15a" eine Regenerierungsstellung.

Die in der Abscheidezone 23 positionierte erste Abscheidefläche 15c" wirkt beim Hindurchströmen des Rohgasstroms 12 durch den Prallabscheider 13 als ein Strömungsleitelement. Ein Strömungsleitelement lenkt den Rohgasstrom 12 an bestimmten Stellen von der Hauptdurchströmungsrichtung 28 in eine Nebenströmungsrichtung 37 ab. Wenigstens einige der im Rohgasstrom 12 enthaltenen Lackoverspray-Teilchen 11 folgen dabei aufgrund von Massenträgheitseffekten weiterhin der Hauptdurchströmungsrichtung 28 und kollidieren mit der ersten Abscheidefläche 15c". Lackoverspray-Teilchen 11 schlagen sich zunächst auf der ersten Abscheidefläche 15c" nieder und werden anschließend mittels Adhäsions- und Kohäsionskräften physikalisch an der ersten Abscheidefläche 15c" gebunden. Durch diese wenigstens zeitweise Interaktion zwischen wenigstens einigen dieser Lackoverspray-Teilchen 11 und der ersten Abscheidefläche 15c" werden diese Lackoverspray-Teilchen 11 aus dem Rohgasstrom 12 entfernt.

Während an der in der Abscheidezone 23 positionierten ersten Abscheidefläche 15c" des ersten Abscheideelements 15 Lackoverspray-Teilchen 11 abgeschieden werden, werden gleichzeitig von einer in der Regenerierungszone 24 positionierten zweiten Abscheidefläche 15a" desselben ersten Abscheideelements 15 Lackoverspray-Teilchen 11 entfernt. Dabei streift der Abreinigungsstempel 30b Lackoverspray-Teilchen 11 ab, die zuvor auf der zweiten Abscheidefläche 15a" abgeschieden wurden. Abgestreifte Lackoverspray-Teilchen 11 fallen in den Sammelbehälter 33. In einem weiteren Schritt wird der Abreinigungsstempel 30b mit Hilfe der zweiten Antriebseinheit 32 wieder in eine Ausgangsposition gebracht.

In einer zweiten (nicht dargestellten) Arbeitsposition, in der das erste Abscheideelement 15 um 90° um die Rotationsachse 26 gedreht angeordnet ist, ist die erste Abscheidefläche 15c" in der Regenerierungszone 24 angeordnet und die zweite Abscheidefläche 15a" in der Abscheidezone 23. In dieser zweiten Arbeitsposition nimmt die erste Abscheidefläche 15c" eine Regenerierungsstellung ein und die zweite Abscheidefläche 15a" eine Abscheidestellung.

Ein Verstellen des ersten Abscheideelements 15 zwischen einer ersten und einer zweiten Arbeitsposition erfolgt durch Drehung um die Rotationsachse 26. Bei einer vollständigen Drehung des ersten Abscheideelements 15 um 360° durchwandert eine Abscheidefläche des ersten Abscheideelements 15 mindestens einmal die Abscheidezone 23 und mindestens einmal die Regenerierungszone 24.

In einem weiteren modifizierten Ausführungsbeispiel weist ein Sammelbehälter eine Einlage aus Karton auf, die eine Verschmutzung des Sammelbehälters reduziert. Eine solche Einlage passt bevorzugt formschlüssig in den Sammelbehälter und kann zu Reinigungszwecken entnommen werden.

In einem weiteren modifizierten Ausführungsbeispiel weist ein Vorabscheider ein einziges Abscheideelement mit mehreren Abscheideflächen auf.

Nach dem Prallabscheider 13 durchströmt der Rohgasstrom 12 das Filter-Vlies 34. Dabei wird wenigstens ein Teil der Lackoverspray-Teilchen 11 abgeschieden, die den Prallabscheider 13 passiert haben.

Nach dem Filter-Vlies 34 durchströmt der Rohgasstrom 12 den Taschenfilter 35. Dabei wird wenigstens ein Teil der Lackoverspray-Teilchen 11 abgeschieden, die den Prallabscheider 13 und das Filter-Vlies 34 passiert haben.

Bei einem Gasstrom 5, der die Abscheidevorrichtung 4 passiert hat, handelt es sich vorzugsweise um einen Reingasstrom 36.

Nach dem Passieren des Taschenfilters 35 wird ein Anteil des Reingasstroms 36 als Abluftstrom 38 aus dem Reingasstrom 36 entfernt und ein Frischluftstrom 39 wird dem Reingasstrom 36 zugeführt. Anschließend durchströmt der Reingasstrom 36 die Konditioniervorrichtung 8. Daraufhin wird der Reingasstrom 36 als Gasstrom 5 erneut der Lackierkabine 3 zugeführt.

Ein Vorabscheider dient dem Schutz eines nachfolgend angeordneten Haupt- und/oder Nachabscheiders. Der Vorabscheider entfernt aus dem Rohgasstrom 12 einen Teil der Lackoverspray-Teilchen 11, sodass der Hauptabscheider und/oder der Nachabscheider weniger Lackoverspray-Teilchen 11 abscheiden müssen. Dadurch können der Haupt- und/oder der Nachabscheider entlastet werden, und die Standzeit des Hauptabscheiders und/oder des Nachabscheiders kann verlängert werden.

Bei Verwendung eines wie im Ausführungsbeispiel 1 beschriebenen Vorabscheiders, der sich selbst reinigen kann und dessen Standzeit damit nahezu unbegrenzt ist, verlängert sich darüber hinaus die Standzeit der gesamten Abscheidevorrichtung.

Eine Anlage zum Beschichten von Karossen, die eine derartige Abscheidevorrichtung umfasst, ist aus diesem Grund besonders kostengünstig und effizient betreibbar.

In einem weiteren modifizierten Ausführungsbeispiel umfasst ein Abscheideelement eines Vorabscheiders mehrere Radialflächenelemente mit mehreren Abscheideflächen, die mit einer Vielzahl an Durchlassöffnungen versehen sind. Die Durchlassöffnungen sind derart an den Abscheideflächen angeordnet, dass ein Rohgasstrom, der den Vorabscheider passiert und dabei auf die Abscheidefläche trifft, diese Durchlassöffnungen passiert. Im Rohgasstrom enthaltene Partikel, insbesondere Lackoverspray-Teilchen, werden dabei an der Abscheidefläche abgeschieden. Die Durchlassöffnungen befinden sich also im Strömungsweg des Rohgasstroms. Eine Abscheidefläche mit einer Durchlassöffnung filtert im Rohgasstrom enthaltene Partikel aus dem Rohgasstrom heraus, indem die Durchlassöffnung für gasförmige Bestandteile des Rohgasstroms passierbar ist, während feste und/oder flüssige Bestandteile wie Partikel und/oder Lackoverspray-Teilchen zumindest teilweise an der Abscheidefläche abgeschieden werden.

Eine Abscheidefläche ist vorzugsweise aus einem polymeren, einem keramischen und/oder einem metallischen Material gebildet. Die Durchlassöffnungen können durch Bohrungen in einem Vollmaterial, durch Zwischenräume und/oder materialfreie Räume in einem Sinter-Material und/oder durch Zwischenräume und/oder materialfreie Räume in einem faserförmigen Gewebe-Material gebildet sein. Insbesondere können hier ein Lochblech, ein Schaumstoff, eine Fasermatte, ein Streckmetall, ein Sintermetall, eine Sinterkeramik und/oder ein Sinterkunststoff vorgesehen sein.

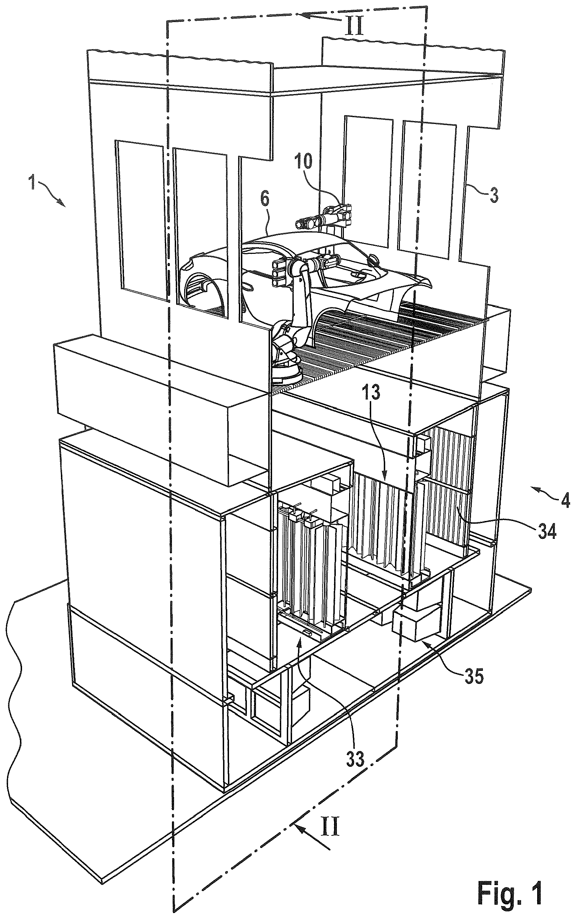

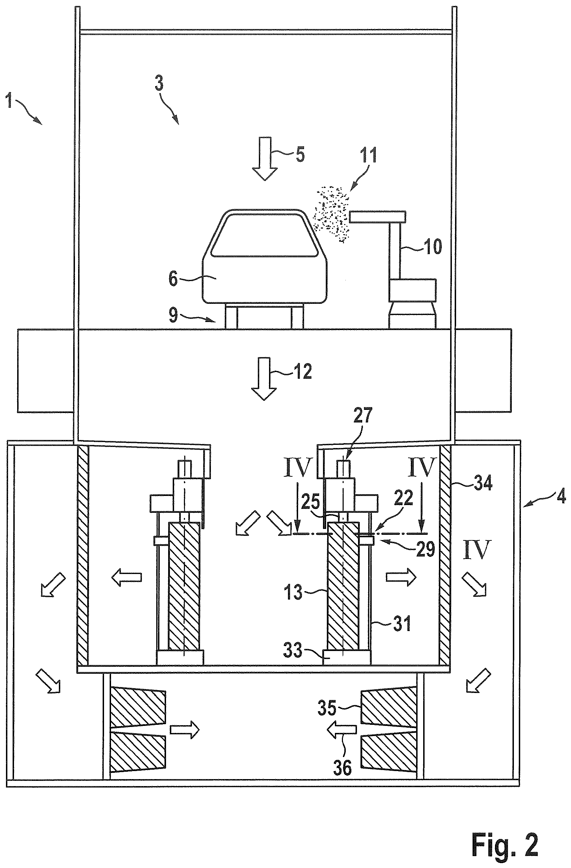

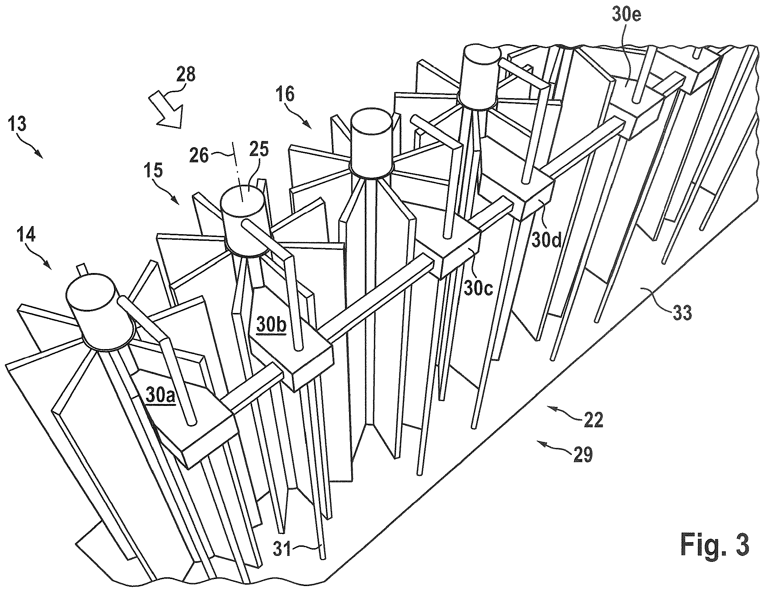

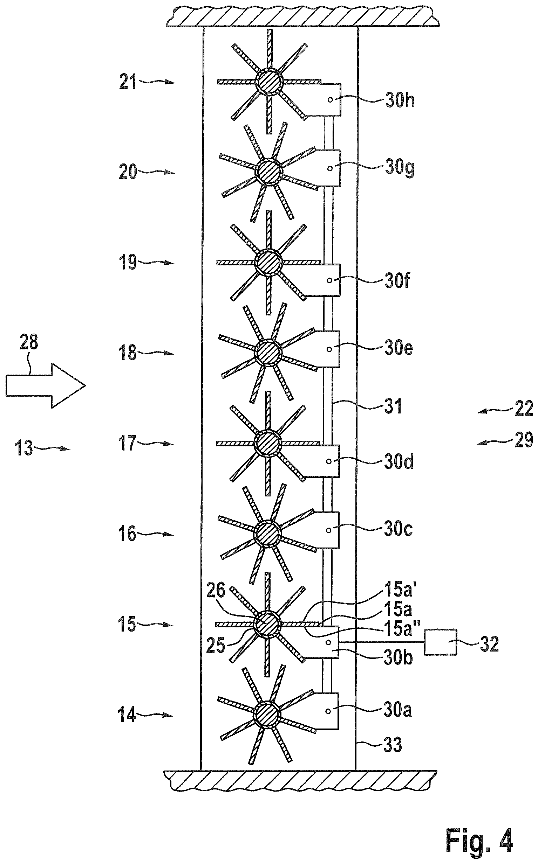

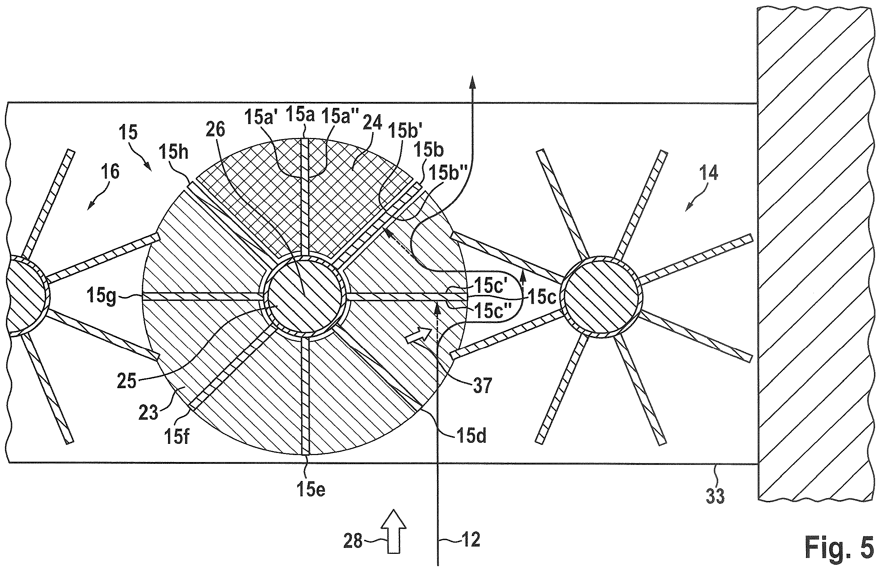

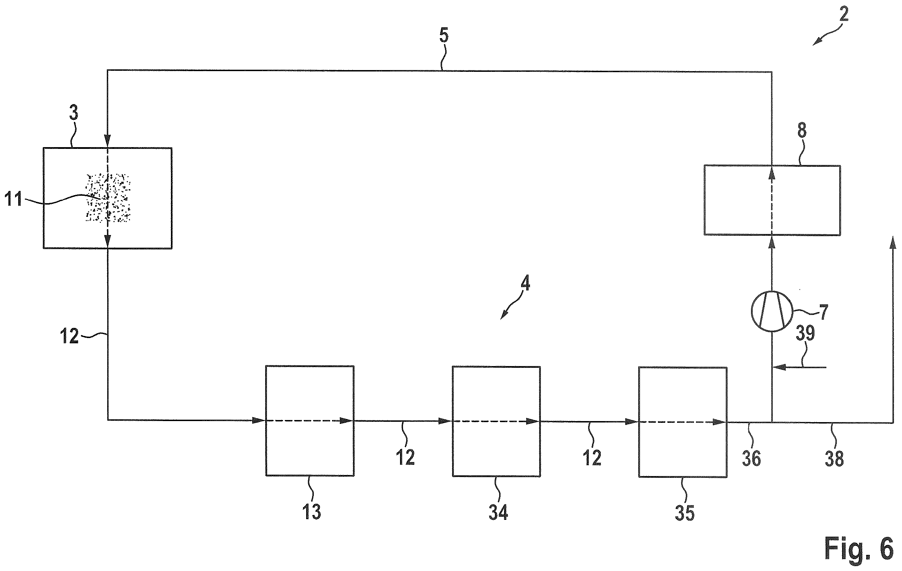

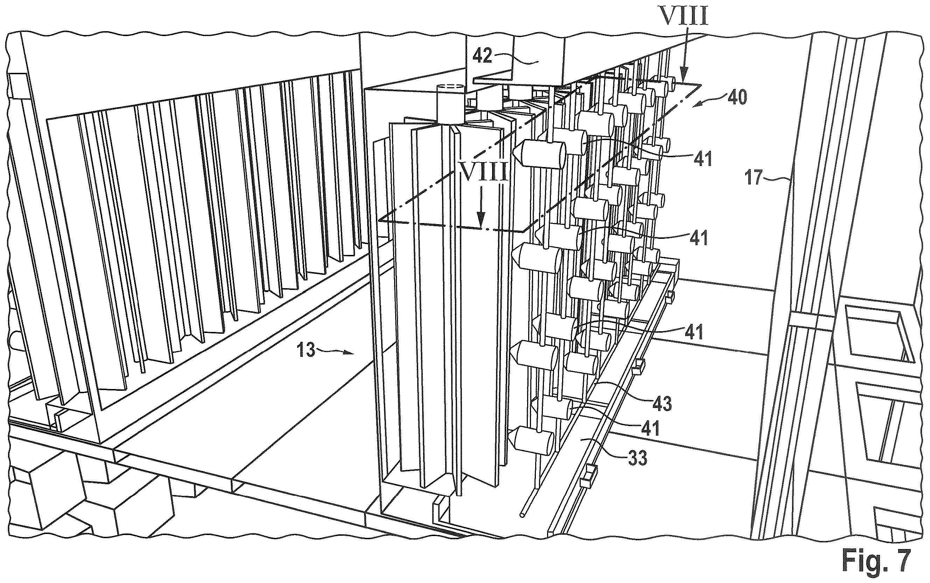

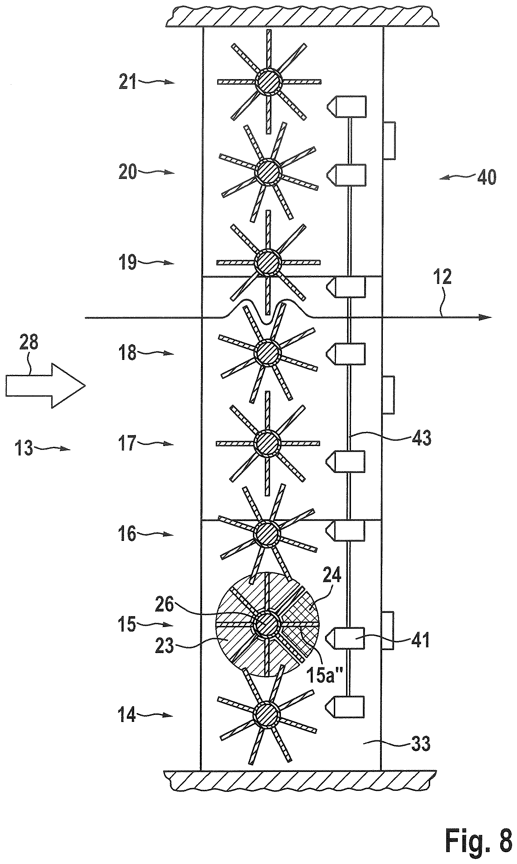

Ein in den Figuren 7 und 8 dargestelltes zweites Ausführungsbeispiel einer Abscheidevorrichtung 4 unterscheidet sich vom in den Figuren 1 bis 6 dargestellten ersten Ausführungsbeispiel im Wesentlichen durch ein andersartig ausgestaltetes Abreinigungssystem. Ein solches Abreinigungssystem umfasst im Wesentlichen eine Strahlvorrichtung 40, mit deren Hilfe ein Strahlmittel mit einer Abscheidefläche in Wechselwirkung gebracht werden kann.

Die Strahlvorrichtung 40 weist ein Trägersystem 43, mehrere am Trägersystem 43 angebrachte Strahldüsen 41 sowie eine Einheit zur Strahlmittelversorgung 42 auf. Die Einheit zur Strahlmittelversorgung 42 umfasst einen Vorratsbehälter und fördert das Strahlmittel von diesem Vorratsbehälter zu einer Strahldüse 41. Eine Strahldüse 41 ist derart auf ein Abscheideelement ausgerichtet, dass ein aus der Strahldüse 41 austretender Strahl auf dem Abscheideelement auftrifft.

Als Strahlmittel wird festes Kohlenstoffdioxid (sogenanntes Trockeneis) eingesetzt. Das Strahlmittel wird in der Strahlvorrichtung 40 unter Druck gesetzt und verlässt die Strahlvorrichtung 40 über eine Strahldüse 41.

Die Abscheidevorrichtung in einer Anlage zum Beschichten von Werkstücken 1 nach Ausführungsbeispiel 2 funktioniert wie folgt.

In einer ersten Arbeitsposition eines Abscheideelements 15 ist eine Abscheidefläche 15a" in einer Abscheidestellung in einer Abscheidezone 23 angeordnet und nimmt Lackoverspray-Teilchen 11 auf, die aus einem Rohgasstrom 12 abgeschieden werden. Nach einer gewissen Zeit erfolgt eine Drehung des Abscheideelements 15 um die Rotationsachse 26 in eine (nicht dargestellte) andere, zweite Arbeitsposition. In einer solchen zweiten Arbeitsposition ist die Abscheidefläche 15a" in einer Regenerierungsstellung in einer Regenerierungszone 24 angeordnet. Nach dem Einnehmen der zweiten Arbeitsposition wird das Strahlmittel mittels der Strahlvorrichtung 40 über eine Strahldüse 41 im Raum freigesetzt. Aufgrund der im Strahlmittel gespeicherten kinetischen Energie und der Ausrichtung der Strahldüse 41 bewegt sich das Strahlmittel in Richtung der Abscheidefläche 15a". Dort wird diese kinetische Energie durch Impulsübertragung zumindest zum Teil vom Strahlmittel auf solche Lackoverspray-Teilchen 11 übertragen, die auf der Abscheidefläche 15a" abgeschieden wurden, und entfernt diese Lackoverspray-Teilchen 11 von der Abscheidefläche 15a". Nach diesem Regenerierungsvorgang kann das Abscheideelement 15 durch eine weitere (gleich- oder gegensinnige) Drehung um die Rotationsachse 26 in eine dritte Arbeitsposition gebracht werden, in der die Abscheidefläche 15a" erneut in einer Abscheidezone 23 angeordnet ist und einem Abscheidevorgang unterzogen werden kann.

In einem modifizierten Ausführungsbeispiel wird alternativ oder zusätzlich zum Trockeneis Druckluft als Strahlmittel eingesetzt. Dabei werden die Bestandteile der Druckluft, im Wesentlichen Stickstoff- sowie Sauerstoffmoleküle, über eine Strahldüse freigesetzt und treffen anschließend auf eine Abscheidefläche auf, auf der zuvor Lackoverspray-Teilchen abgeschieden worden sind.

In einem weiteren modifizierten Ausführungsbeispiel weist ein Abreinigungssystem eine Strahldüse auf, die beweglich angeordnet und durch Verstellen derart positionierbar ist, dass diese Strahldüse zunächst Lackoverspray-Teilchen von einem ersten Bereich einer Abscheidefläche und anschließend Lackoverspray-Teilchen von einem anderen Bereich derselben Abscheidefläche entfernen kann. Für das Bewegen einer oder mehrerer Strahldüsen weist ein derartiges Abreinigungssystem eine zusätzliche Antriebseinheit auf.

In einem weiteren modifizierten Ausführungsbeispiel weist ein Abreinigungssystem eine Strahldüse auf, die beweglich angeordnet und durch Verstellen derart positionierbar ist, dass diese Strahldüse zunächst Lackoverspray-Teilchen von einer Abscheidefläche eines Abscheideelements und anschließend Lackoverspray-Teilchen von einer Abscheidefläche eines andere Abscheideelements entfernen kann.

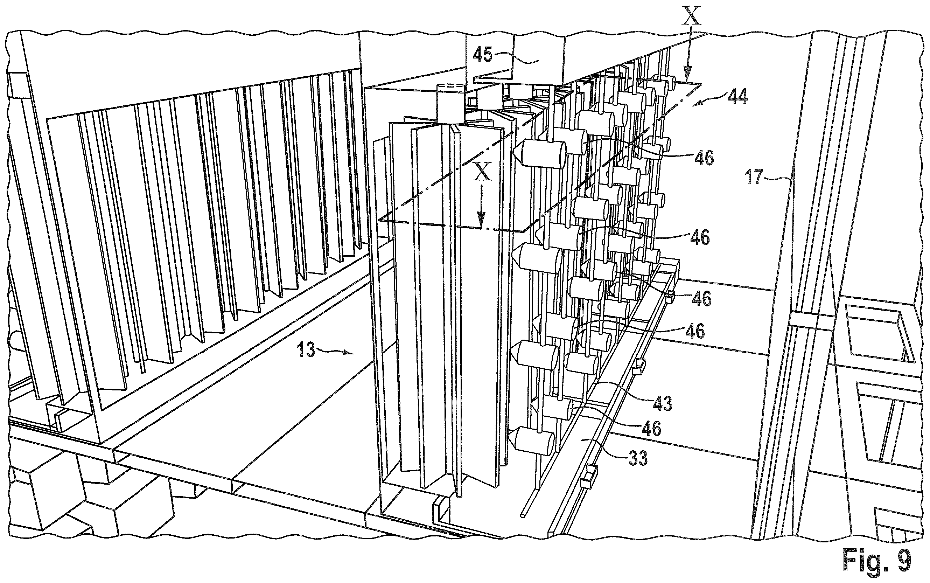

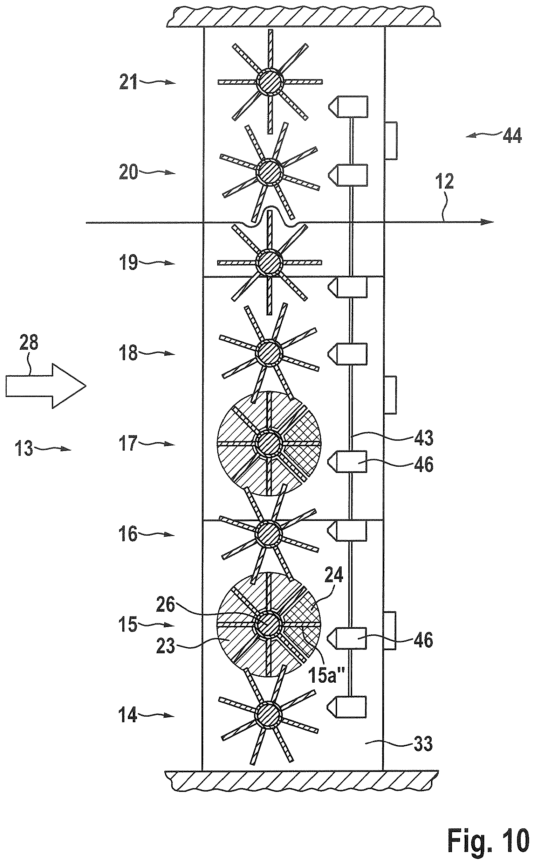

Ein in Figur 9 und Figur 10 dargestelltes drittes Ausführungsbeispiel einer Abscheidevorrichtung 4 unterscheidet sich vom ersten Ausführungsbeispiel im Wesentlichen dadurch, dass eine Regenerierungsvorrichtung zusätzlich zu einem Abreinigungssystem ein Hilfsmaterialsystem 44 aufweist. Ein Hilfsmaterialsystem 44 dient dazu, ein Hilfsmaterial auf eine Abscheidefläche eines Abscheideelements aufzubringen.

Das Hilfsmaterialsystem 44 umfasst eine Einheit zur Hilfsmaterialversorgung 45 und mehrere an einer Haltevorrichtung angebrachte Hilfsmaterialdüsen 46. Die Einheit zur Hilfsmaterialversorgung 45 umfasst einen Vorratsbehälter und fördert ein Hilfsmaterial von diesem Vorratsbehälter zu einer Hilfsmaterialdüse 46.

Als Hilfsmaterial wird Kalksteinmehl verwendet. Kalksteinmehl-Teilchen interagieren bei Berührung physikalisch mit Lackoverspray-Teilchen.

Die Abscheidevorrichtung nach Ausführungsbeispiel 3 funktioniert wie folgt.

In einer ersten Arbeitsposition eines Abscheideelements ist eine erste Abscheidefläche in einer Regenerierungszone angeordnet und eine zweite Abscheidefläche in einer Abscheidezone. Auf die erste Abscheidefläche werden mittels einer Hilfsmaterialdüse 46 Kalksteinmehl-Teilchen aufgebracht. Kalksteinmehl-Teilchen bilden bevorzugt eine Trennschicht aus zwischen einer Abscheidefläche und Lackoverspray-Teilchen. Gleichzeitig werden an der zweiten Abscheidefläche Lackoverspray-Teilchen abgeschieden, die ein Bestandteil eines Rohgasstroms sind, der die Abscheidevorrichtung passiert.

Nach einer gewissen Zeit wird das Abscheideelement in eine zweite Arbeitsposition verstellt, sodass die erste Abscheidefläche in einer Abscheidezone angeordnet ist und Lackoverspray-Teilchen daran abgeschieden werden können. Gleichzeitig werden mit Hilfe des Abreinigungssystems Kalksteinmehl-Teilchen und Lackoverspray-Teilchen von der in einer Regenerierungszone angeordneten zweiten Abscheidefläche entfernt. In einem weiteren Schritt werden anschließend erneut Kalksteinmehl-Teilchen als Trennschicht auf die zweite Abscheidefläche aufgebracht.

In einem modifizierten Ausführungsbeispiel wird als Hilfsmaterial eine Sprühfolie anstelle von Kalksteinmehl-Teilchen eingesetzt. Eine Sprühfolie beinhaltet eine oder mehrere flüssige Komponenten, die auf eine Abscheidefläche aufgebracht werden und dort durch Verlaufen eine Schicht bilden. Mit Hilfe einer physikalischen und/oder chemischen Reaktion einer Komponente, optional mit einer anderen Komponente und/oder einem Reaktionsgas, z.B. Luft, wird ein fester, folienartiger Stoff gebildet, der als Trennschicht zwischen einer Abscheidefläche und einem Lackoverspray-Teilchen wirkt und in einem Regenerierungsschritt abgezogen werden kann.

In einem weiteren modifizierten Ausführungsbeispiel wird als Hilfsmaterial ein Fett verwendet. Das Fett umfasst vorzugsweise eine oder mehrere bei Raumtemperatur feste und/oder zähflüssige Kohlenwasserstoffverbindungen.
Das Fett kann beispielsweise mittels Druck zerstäubt und mit Hilfe einer Hilfsmaterialdüse auf ein Radialflächenelement eines Abscheideelements aufgebracht werden. Das aufgebrachte Fett wirkt als Trennschicht zwischen dem Radialflächenelement und den Lackoverspray-Teilchen und erleichtert eine Reinigung des Radialflächenelements.
Zur Reinigung des Radialflächenelements wird ein Abreinigungssystem verwendet, das beispielsweise physikalisch und/oder chemisch auf die abgeschiedenen Lackoverspray-Teilchen und/oder das Fett einwirkt. Ein derartiges Abreinigungssystem umfasst bevorzugt einen Abreinigungsstempel und/oder eine Strahlvorrichtung zum Aufbringen eines Reinigungsfluids wie Wasser, Alkohol und/oder Druckluft.

In einem weiteren modifizierten Ausführungsbeispiel umfassen die Abscheideflächen eine Vielzahl von Durchlassöffnungen, wobei die Abscheideflächen in einem Betrieb der Abscheidevorrichtung zumindest temporär mit einem Hilfsmaterial versehen sind und mit Hilfe eines Abreinigungssystems gereinigt werden können.

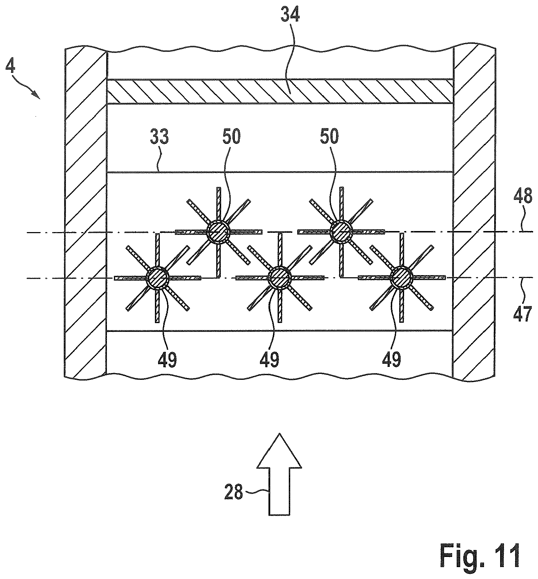

Ein in Figur 11 dargestelltes viertes Ausführungsbeispiel einer Abscheidevorrichtung 4 unterscheidet sich von den in den Figuren 1 bis 9 dargestellten Ausführungsbeispielen im Wesentlichen dadurch, dass mehrere Abscheideelemente in unterschiedlichen Tiefenpositionen angeordnet sind.
Durch die Abscheidevorrichtung 4 ist eine vertikal ausgerichtete primäre Hilfsebene 47 gelegt. In der primären Hilfsebene 47 ist dabei eine erste Gruppe von Abscheideelementen 49 angeordnet, wobei die Rotationsachsen der Abscheideelemente dieser ersten Gruppe von Abscheideelementen 49 in der primären Hilfsebene 47 liegen. Die erste Gruppe von Abscheideelementen 49 umfasst drei Abscheideelemente.
Durch die Abscheidevorrichtung 4 ist außerdem eine vertikal ausgerichtete sekundäre Hilfsebene 48 gelegt. In der sekundären Hilfsebene 48 ist dabei eine zweite Gruppe von Abscheideelementen 50 angeordnet, wobei die Rotationsachsen der Abscheideelemente dieser zweiten Gruppe von Abscheideelementen 50 in der sekundären Hilfsebene 48 liegen. Die zweite Gruppe von Abscheideelementen 50 umfasst zwei Abscheideelemente.
Die primäre Hilfsebene 47 und die sekundäre Hilfsebene 48 sind in Hauptdurchströmungsrichtung 28 nacheinander sowie parallel und mit einem gewissen Abstand zueinander angeordnet.
Ein Rohgasstrom 12, der die Abscheidevorrichtung 4 in Hauptdurchströmungsrichtung 28 durchströmt, kreuzt zunächst die primäre Hilfsebene 47 und anschließend die sekundäre Hilfsebene 48.
Wenn Abscheideelemente in einer Abscheidevorrichtung in unterschiedlichen Tiefenpositionen angeordnet sind, können bei gleicher Breite der Abscheidevorrichtung mehr Abscheideelemente oder bei geringerer Breite der Abscheidevorrichtung die gleiche Zahl an Abscheideelementen in der Abscheidevorrichtung angeordnet werden, als wenn Abscheideelemente in einer Tiefenposition angeordnet sind.

In einem modifizierten Ausführungsbeispiel ist eine in der zweiten Hilfsebene angeordnete zweite Gruppe von Abscheideelementen auf einer parallel zur Hauptdurchströmungsrichtung angeordneten Achse verschiebbar ausgebildet. In Folge verändert sich der Abstand zwischen einer in der primären Hilfsebene angeordneten ersten Gruppe von Abscheideelementen einerseits und einer in der sekundären Hilfsebene angeordneten zweiten Gruppe von Abscheideelementen andererseits.
Wenn eine Gruppe von Abscheideelementen derart verschiebbar ausgebildet ist, kann ein Abstand zwischen mehreren Gruppen von Abscheideelementen beispielsweise wenigstens vorübergehend vergrößert werden. Dadurch vergrößert sich der Abstand zwischen einer Abscheidefläche eines Abscheideelements der einen Gruppe von Abscheideelementen und einer Abscheidefläche eines Abscheideelements der anderen Gruppe von Abscheideelementen. Durch die Vergrößerung des Abstands kann ein Aufbau einer Schicht von Lackoverspray-Teilchen auf einer Abscheidefläche und ein daraus resultierender abnehmender Abstand zwischen dieser Abscheidefläche und einer Abscheidefläche eines Abscheideelements einer anderen Gruppe von Abscheideelementen zumindest teilweise ausgeglichen werden. Nach einem Regenerierungsvorgang, bei dem Lackoverspray-Teilchen von einer Abscheidefläche entfernt werden, kann ein Abstand zwischen den Gruppen von Abscheideelementen wieder verringert werden.

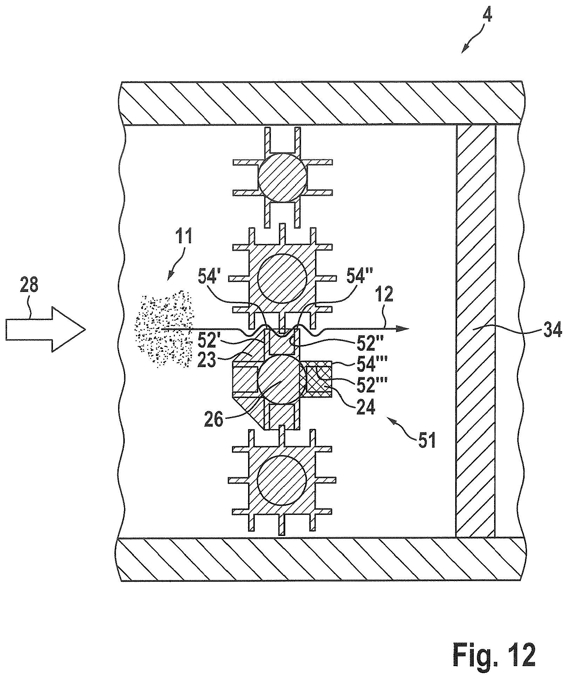

Ein in Figur 12 dargestelltes fünftes Ausführungsbeispiel einer Abscheidevorrichtung 4 unterscheidet sich von den in den Figuren 1 bis 11 dargestellten Ausführungsbeispielen im Wesentlichen dadurch, dass vier Abscheideelemente vorgesehen sind. Weiterhin unterscheidet sich die Abscheidevorrichtung 4 dadurch, dass die Abscheideelemente alternativ ausgestaltet sind. Eine solche erste alternative Ausgestaltung eines Abscheideelements 51 weist insbesondere mehrere Flächenelemente 54', 54", 54"' mit andersartig angeordneten Abscheideflächen auf.

Eine erste andersartig angeordnete Abscheidefläche 52' und eine in Hauptdurchströmungsrichtung 28 nach der ersten andersartig angeordneten Abscheidefläche 52' angeordnete zweite andersartig angeordnete Abscheidefläche 52" weisen dabei eine weitgehend parallele Ausrichtung zueinander auf. Eine dritte andersartig angeordnete Abscheidefläche 52'" weist eine weitgehend senkrechte Ausrichtung zu den beiden vorher genannten Abscheideflächen auf.

Während in einer ersten Arbeitsposition einer ersten alternativen Ausgestaltung eines Abscheideelements 51 die erste andersartig angeordnete Abscheidefläche 52' und die zweite andersartig angeordnete Abscheidefläche 52" gleichzeitig in einer Abscheidezone 23 angeordnet sind, ist die dritte andersartig angeordnete Abscheidefläche 52'" in einer Regenerierungszone 24 angeordnet. Während an der ersten andersartig angeordneten Abscheidefläche 52' und an der zweiten andersartig angeordneten Abscheidefläche 52" Lackoverspray-Teilchen 11 abgeschieden werden, werden von der dritten andersartig angeordneten Abscheidefläche 52'" Lackoverspray-Teilchen 11 entfernt.

Nach einer gewissen Zeit wird die erste alternative Ausgestaltung eines Abscheideelements 51 durch Drehung um eine Rotationsachse 26 von der ersten in eine zweite Arbeitsposition verstellt. Nach dieser Drehung sind die erste andersartig angeordnete Abscheidefläche 52' und die zweite andersartig angeordnete Abscheidefläche 52" in der Regenerierungszone 24 positioniert, und die dritte andersartig angeordnete Abscheidefläche 52"' in der Abscheidezone 23. Während von der ersten andersartig angeordneten Abscheidefläche 52' und der zweiten andersartig angeordneten Abscheidefläche 52" Lackoverspray-Teilchen 11 entfernt werden, werden an der dritten andersartig angeordneten Abscheidefläche 52'" Lackoverspray-Teilchen 11 abgeschieden.

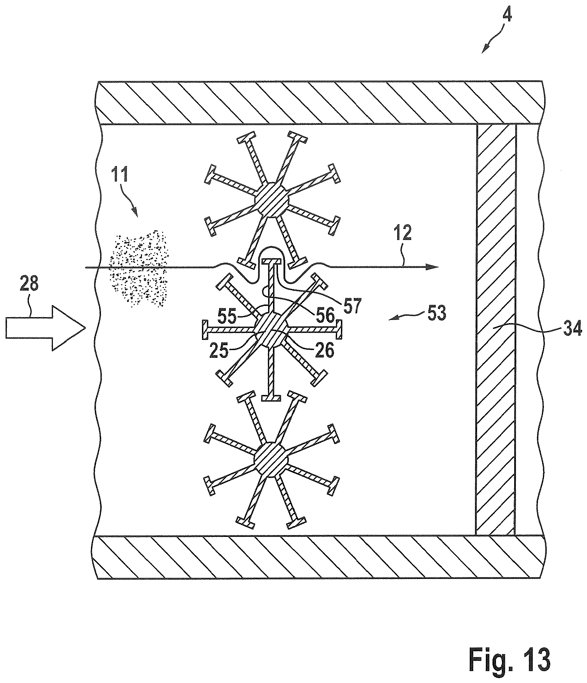

Ein in Figur 13 dargestelltes sechstes Ausführungsbeispiel einer Abscheidevorrichtung 4 ist in einer Anlage zum Beschichten von Werkstücken 1 angeordnet, die im Unterschied zu den vorigen Ausführungsbeispielen dem Lackieren von Teilen und/oder Anbauteilen von Karosserien dient, wie beispielsweise Hauben, Türen, Seitenteilen, Frontklappen, Heckklappen, Stoßfängern und/oder Außenspiegelgehäusen. Die Abscheidevorrichtung 4 unterscheidet sich von den in den Figuren 1 bis 12 dargestellten Ausführungsbeispielen im Wesentlichen durch eine zweite alternative Ausgestaltung eines Abscheideelements 53. In der Abscheidevorrichtung 4 nach Ausführungsbeispiel 6 sind drei Abscheideelemente zweiter alternativer Ausgestaltung vorgesehen.

Eine solche zweite alternative Ausgestaltung eines Abscheideelements 53 weist insbesondere eine Welle 25, mehrere andersartig konfigurierte Radialflächenelemente 55 sowie mehrere andersartig konfigurierte Abscheideflächen 56 auf. Ein andersartig konfiguriertes Radialflächenelement 55 ist radial abragend an der Welle 25 angeordnet. An einem zu der Welle 25 entgegengesetzten Ende des andersartig konfigurierten Radialflächenelements 55 ist ein Rückhalteelement 57 vorgesehen. Das Rückhalteelement 57 ragt in einem Winkel von 45° bis 90°, vorzugsweise senkrecht, vom andersartig konfigurierten Radialflächenelement 55 ab.

Ein Rückhalteelement 57 wirkt als Barriere für einen die Abscheidevorrichtung 4 passierenden Rohgasstrom 12 und für an einer andersartig konfigurierten Abscheidefläche 56 des andersartig konfigurierten Radialflächenelements 55 abgeschiedene Lackoverspray-Teilchen 11. Das Rückhalteelement 57 verhindert wenigstens teilweise, dass abgeschiedene Lackoverspray-Teilchen 11 vom vorbeiströmenden Rohgasstrom 12 mitgerissen werden.

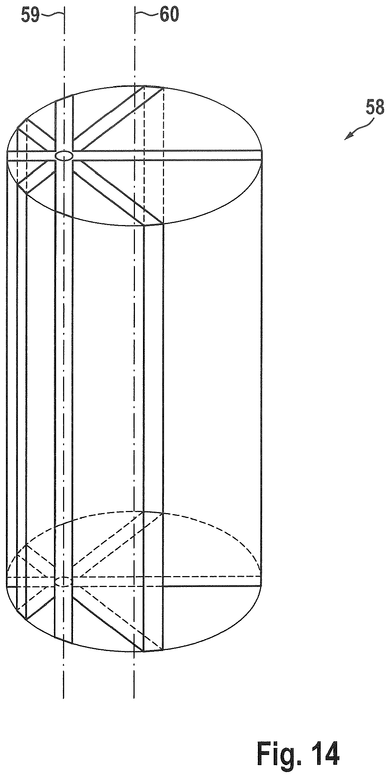

Ein in Figur 14 dargestelltes siebtes Ausführungsbeispiel einer Abscheidevorrichtung 4 unterscheidet sich von den in den Figuren 1 bis 13 dargestellten Ausführungsbeispielen im Wesentlichen durch eine dritte alternative Ausgestaltung eines Abscheideelements 58. Dabei ist eine erste alternativ angeordnete Rotationsachse 59 parallel zu einer zentralen Längsachse 60 des Abscheideelements ausgerichtet und mit gewissem Abstand zu dieser zentralen Längsachse 60 angeordnet.

Sind mehrere solcher Abscheideelemente in einer Reihe angeordnet und werden um ihre jeweilige Rotationsachse gedreht, bewirken die gegenüber einer zentralen Längsachse versetzt angeordneten Rotationsachsen einen variierenden Abstand zwischen den Abscheideelementen. Damit können eine Strömungsgeschwindigkeit und/oder ein Druckverlust des Rohgasstroms 12, und/oder ein Abscheidegrad des Prallscheiders 13 beeinflusst werden.

In einem modifizierten Ausführungsbeispiel weist eine weitere alternative Ausgestaltung eines Abscheideelements eine Rotationsachse auf, die eine zentrale Längsachse des Abscheideelements in einem Punkt innerhalb einer Außenkontur des Abscheideelements schneidet.

In einem weiteren modifizierten Ausführungsbeispiel ist eine Rotationsachse eines Abscheideelements in Bezug auf die Position und/oder die Ausrichtung verstellbar ausgestaltet.

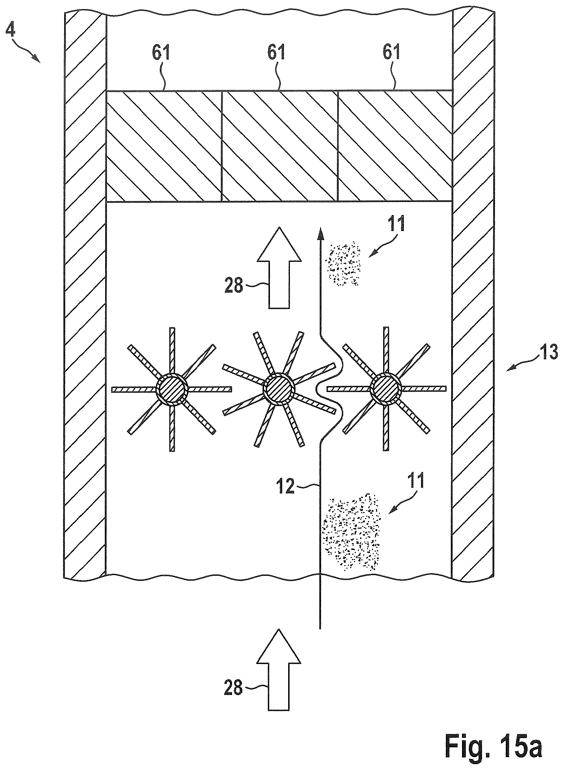

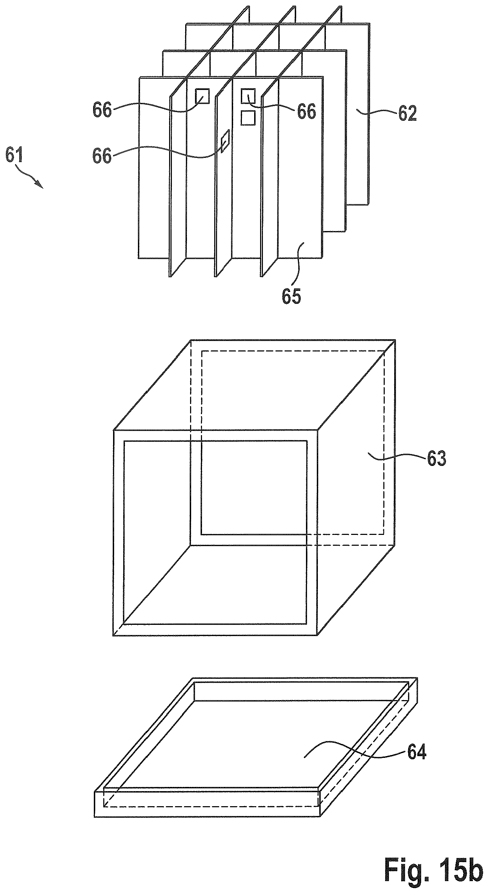

Ein in den Figuren 15a und 15b dargestelltes achtes Ausführungsbeispiel einer Abscheidevorrichtung 4 unterscheidet sich von den in den Figuren 1 bis 14 dargestellten Ausführungsbeispielen im Wesentlichen dadurch, dass als Hauptabscheider ein Faltkartonfilter 61 vorgesehen ist.

Mehrere Faltkartonfilter 61 sind dabei in einem Raster neben- und übereinander angeordnet, im hier beschriebenen Ausführungsbeispiel sind es neun Faltkartonfilter 61 insgesamt, angeordnet in einem Raster mit drei Faltkartonfiltern 61 nebeneinander und drei Faltkartonfiltern 61 übereinander.

Ein Faltkartonfilter 61 umfasst ein Innenelement 62 und ein Außenelement 63 sowie optional ein Wannenelement 64, wobei ein Innenelement 62 temporär innerhalb eines Außenelements 63 und ein Außenelement 63 temporär in einem Wannenelement 64 angeordnet sind.

Ein Innenelement 62 weist einen Wandabschnitt 65 mit mehreren Durchtritts- und/oder Umlenköffnungen 66 auf. Durch die Durchtritts- und/oder Umlenköffnungen 66 strömt der Rohgasstrom 12 hindurch, während an geschlossenen Teilbereichen eines Wandabschnitts 65 Lackoverspray-Teilchen 11 abgeschieden werden.

Im Betrieb der Abscheidevorrichtung 4 tritt der Rohgasstrom 12 in einer Hauptdurchströmungsrichtung 28 in den Faltkartonfilter 61 ein, passiert diesen und wird dabei mehrfach umgelenkt. Beim Umlenken werden Lackoverspray-Teilchen 11 mit Hilfe von Trägheitseffekten an einem geschlossenen Teilbereich eines Wandabschnitts 65 des Faltkartonfilters 61 abgeschieden.

Ist eine Abscheidewirkung eines Faltkartonfilters 61 reduziert und/oder erschöpft, wird er aus der Abscheidevorrichtung 4 entfernt und durch einen neuen Faltkartonfilter 61 oder durch einen gereinigten und/oder aufbereiteten Faltkartonfilter 61 ersetzt.

In einem modifizierten Ausführungsbeispiel sind mehrere Faltkartonfilter in Hauptdurchströmungsrichtung nacheinander angeordnet, sodass ein Rohgasstrom die Faltkartonfilter nacheinander durchströmt.

In einem weiteren modifizierten Ausführungsbeispiel ist ein Faltkartonfilter konisch ausgebildet. Dabei nimmt eine vertikale Querschnittsfläche des Faltkartonfilters in Hauptdurchströmungsrichtung ab. Ein Hauptabscheider weist vorzugsweise eine gegenüber dem Faltkartonfilter negativ ausgebildete Aufnahmevorrichtung auf. Ein derart ausgebildeter Faltkartonfilter kann aufgrund einer durch die konische Form bedingten Zentrierwirkung besonders einfach im Hauptabscheider installiert und aus diesem wieder entnommen werden.

In einem weiteren modifizierten Ausführungsbeispiel sind mehrere verschiedenartige Innenelemente hintereinander und/oder nebeneinander in einem Außenelement angeordnet. Damit kann je nach Menge und Beschaffenheit von in einem Rohgasstrom enthaltenen Partikeln eine andere Anzahl an Innenelementen bzw. ein anders gestaltetes Innenelement im Außenelement angeordnet werden.

In einem weiteren modifizierten Ausführungsbeispiel kann statt eines Faltkartonfilters ein System mit Starrkörperfilterelementen als Hauptabscheider zum Einsatz kommen, wobei Starrkörperfilterelemente vorzugsweise aus einem polymeren Material gefertigt sind. Starrkörperfilterelemente wirken als regenerierbare Oberflächenfilter, deren Oberfläche mit einer aus einem Hilfsmaterial gebildeten Sperrschicht vor Lackoverspray-Teilchen geschützt werden kann.

In einem weiteren modifizierten Ausführungsbeispiel kann statt eines Faltkartonfilters ein elektrostatisches Nassabscheide-System als Hauptabscheider zum Einsatz kommen. Dabei werden Lackoverspray-Teilchen zunächst mittels einer Korona-Elektrode elektrisch aufgeladen und anschließend an einer geerdeten Abscheideelektrode abgeschieden.

Um die Abscheideelektrode vor einem Verkleben durch Lackoverspray-Teilchen zu schützen und um die abgeschiedenen Lackoverspray-Teilchen aus dem Hauptabscheider zu entfernen, weist ein elektrostatisches Nassabscheide-System ein Flüssigkeitssystem auf, das einen Stoff und/oder ein Stoffgemisch mit flüssigen, wachsartigen und/oder pastösen Komponenten umfasst. Der Stoff und/oder das Stoffgemisch benetzen die Abscheideelektrode und nehmen auftreffende Lackoverspray-Teilchen auf. Vorzugsweise handelt es sich bei der Substanz um ein Trennmittel.

In einem weiteren modifizierten Ausführungsbeispiel kommt ein als Hybridfilter ausgebildeter Hauptabscheider zum Einsatz.

Ein Hybridfilter weist mehrere unterschiedlich wirkende Teil-Abscheidesysteme auf und umfasst zusätzlich zu einem Kartonmaterial ein faserförmiges Kunststoffmaterial sowie ein Holzmaterial.

Aus dem Kartonmaterial und aus dem faserförmigen Kunststoffmaterial sind unterschiedlich wirkende Teil-Abscheidesysteme gebildet, die zum Beispiel Lackoverspray-Teilchen unterschiedlicher Teilchen-Größe unterschiedlich gut abscheiden können. Ein erstes Teil-Abscheidesystem umfasst einen Oberflächenfilter, an dessen Oberfläche Lackoverspray-Teilchen abgeschieden werden können. Ein zweites Teil-Abscheidesystem umfasst einen Tiefenfilter, der Lackoverspray-Teilchen in sein Inneres aufnehmen kann.

Das Holzmaterial erfüllt eine Stütz- und Stabilisierungsfunktion und verstärkt den Hybridfilter vorzugsweise.

In einem weiteren modifizierten Ausführungsbeispiel ist eine Abscheidevorrichtung nur auf einer Seite einer als vertikale Längsmittelebene einer Beschichtungsanlage ausgestalteten Hilfsebene angeordnet. Bei einer solchen Anordnung können auf der anderen Seite der Hilfsebene beispielsweise technische Einrichtungen und/oder Räumlichkeiten für die Lagerung von Material vorgesehen sein.

In einem weiteren modifizierten Ausführungsbeispiel ist eine Abscheidefläche aus einem ferromagnetischen Werkstoff in Form einer Stahl-Legierung gebildet und weist eine Magnetspule auf. Ein Hilfsmaterial zum Schutz der Abscheidefläche umfasst dann insbesondere ein ferromagnetisches Material in Form von Eisenpulver.
Um abgeschiedene Lackoverspray-Teilchen und Hilfsmaterial von der Abscheidefläche zu entfernen, umfasst die Abscheidevorrichtung eine Strahlvorrichtung, mit der ein Druckluftstrahl auf die Abscheidefläche ausgerichtet werden kann.

In einem weiteren modifizierten Ausführungsbeispiel ist eine Abscheidefläche aus einem hartmagnetischen Werkstoff in Form einer Eisen-Legierung gestaltet. Ein Hilfsmaterial zum Schutz der Abscheidefläche umfasst dann insbesondere ein Ferrofluid in Form einer kolloidalen Suspension aus Eisen in Wasser.

Die Abscheidevorrichtung umfasst einen Abreinigungsstempel, um abgeschiedene Lackoverspray-Teilchen und Hilfsmaterial von der Abscheidefläche zu entfernen. Der Abreinigungsstempel wird dabei entlang der Abscheidefläche bewegt.

In einem weiteren modifizierten Ausführungsbeispiel ist eine Abscheidefläche mit einem Folienmaterial bedeckt. Ein Folienmaterial wirkt als Trennschicht zwischen einer Abscheidefläche und Lackoverspray-Teilchen. In bestimmten Zeitabständen kann ein Folienmaterial mitsamt daran abgeschiedenen Lackoverspray-Teilchen von der Abscheidefläche entfernt und durch neues, frisches und/oder gereinigtes Folienmaterial ersetzt werden.

Alternativ oder zusätzlich zu einem Folienmaterial kann ein Kartonmaterial eingesetzt werden.

In einem weiteren modifizierten Ausführungsbeispiel ist ein Abscheideelement in einem Vorabscheider horizontal liegend angeordnet. Eine Hauptdurchströmungsrichtung eines Rohgasstroms durch den Vorabscheider ist dann im Wesentlichen vertikal ausgerichtet.

In einem weiteren modifizierten Ausführungsbeispiel ist stromabwärts von einem Hauptabscheider ein Lochblech angeordnet, das an bestimmten Stellen Löcher aufweist und das mit seinen Außenabmessungen den freien Querschnitt der Abscheidevorrichtung ausfüllt. Das Lochblech bewirkt eine gleichmäßigere Durchströmung der Abscheidevorrichtung.

### Bezugszeichenliste

- 1: Anlage zum Beschichten von Werkstücken
- 2: Luftführungssystem
- 3: Lackierkabine
- 4: Abscheidevorrichtung
- 5: Gasstrom
- 6: Karosse
- 7: Ventilator
- 8: Konditioniervorrichtung
- 9: Fördervorrichtung
- 10: Applikationsvorrichtung
- 11: Lackoverspray-Teilchen
- 12: Rohgasstrom
- 13: Prallabscheider
- 14, 15, 16, 17, 18, 19, 20, 21: Abscheideelement(e)
- 15a, 15b, 15c, 15d, 15e, 15f, 15g, 15h: Radialflächenelement(e)
- 15a', 15a", 15b', 15b", 15c', 15c": Abscheidefläche(n)
- 22: Regenerierungsvorrichtung
- 23: Abscheidezone
- 24: Regenerierungszone
- 25: Welle
- 26: Rotationsachse
- 27: Erste Antriebseinheit
- 28: Hauptdurchströmungsrichtung
- 29: Abreinigungssystem
- 30a, 30b, 30c, 30d, 30e, 30f, 30g, 30h: Abreinigungsstempel
- 31: Trägervorrichtung
- 32: Zweite Antriebseinheit
- 33: Sammelbehälter
- 34: Filter-Vlies
- 35: Taschenfilter
- 36: Reingasstrom
- 37: Nebenströmungsrichtung
- 38: Abluftstrom
- 39: Frischluftstrom
- 40: Strahlvorrichtung
- 41: Strahldüse
- 42: Einheit zur Strahlmittelversorgung
- 43: Trägersystem
- 44: Hilfsmaterialsystem
- 45: Einheit zur Hilfsmaterialversorgung
- 46: Hilfsmaterialdüse
- 47: Primäre Hilfsebene
- 48: Sekundäre Hilfsebene
- 49: Erste Gruppe von Abscheideelementen
- 50: Zweite Gruppe von Abscheideelementen
- 51: Erste alternative Ausgestaltung eines Abscheideelements
- 52', 52", 52''': Erste, zweite, dritte andersartig angeordnete Abscheidefläche
- 53: Zweite alternative Ausgestaltung eines Abscheideelements
- 54', 54", 54''': Flächenelemente
- 55: Andersartig konfiguriertes Radialflächenelement
- 56: Andersartig konfigurierte Abscheidefläche
- 57: Rückhalteelement
- 58: Dritte alternative Ausgestaltung eines Abscheideelements
- 59: Erste alternativ angeordnete Rotationsachse
- 60: Zentrale Längsachse
- 61: Faltkartonfilter
- 62: Innenelement
- 63: Außenelement
- 64: Wannenelement
- 65: Wandabschnitt
- 66: Durchtritts- und/oder Umlenköffnungen

## Patentansprüche

1. Abscheidevorrichtung (4) zum Abscheiden von Partikeln aus einem Rohgasstrom (12), wobei im Rohgasstrom ein Anteil fester, flüssiger und/oder pastöser Partikel mitführbar ist, mit einem Hauptabscheider, der wenigstens einen Teil der Partikel aus dem Rohgasstrom abscheidet, wobei der Rohgasstrom den Hauptabscheider in einer Hauptdurchströmungsrichtung (28) durchströmt und als Reingasstrom (36) aus dem Hauptabscheider austritt, wobei
- die Abscheidevorrichtung einen Vorabscheider zum Abscheiden wenigstens eines Teils der Partikel aus dem Rohgasstrom aufweist, wobei
- der Vorabscheider derart stromaufwärts zum Hauptabscheider angeordnet ist, dass der Rohgasstrom in der Hauptdurchströmungsrichtung zuerst den Vorabscheider und nachfolgend den Hauptabscheider durchströmt, wobei
- der Vorabscheider ein Abscheideelement (14, 15, 16, 17, 18, 19, 20, 21, 51, 53, 58) umfasst, welches zur Umlenkung des Rohgasstroms (12) vorgesehen ist, wobei das Abscheideelement eine Welle (25) sowie ein Radialflächenelement (15a, 15b, 15c, 15d, 15e, 15f, 15g, 15h) umfasst, das radial von der Welle abstehend an der Welle angeordnet ist, und welches eine an dem Radialflächenelement angeordnete Abscheidefläche (15a', 15a", 15b', 15b", 15c', 15c", 52', 52", 52"', 56) aufweist, an der Partikel aus dem Rohgasstrom abgeschieden werden können, wobei
- sich Außenkonturen zweier zueinander benachbart angeordneter Abscheideelemente schneiden,
- wobei die Außenkontur eines Abscheideelements die Oberfläche eines fiktiven näherungsweise zylinderförmig und/oder prismenförmig ausgebildeten Körpers ist,
- wobei ein Abscheideelement (14, 15, 16, 17, 18, 19, 20, 21, 51, 53, 58) kontinuierlich oder intervallweise um eine Rotationsachse (26, 59) drehbar ausgestaltet ist, um das Abscheideelement zwischen mehreren Arbeitspositionen zu verstellen, und mindestens zwei Abscheideflächen (15a', 15a", 15b', 15b", 15c', 15c", 52', 52", 52"', 56) zum Abscheiden von Partikeln aufweist, wobei in einer ersten Arbeitsposition des Abscheideelements eine Abscheidefläche des Abscheideelements sich in einer Abscheidestellung befindet, während gleichzeitig eine andere Abscheidefläche desselben Abscheideelements sich in einer Regenerierungsstellung befindet,
- wobei eine Abscheidefläche (15a', 15a", 15b', 15b", 15c', 15c", 52', 52", 52"', 56) des Abscheideelements (14, 15, 16, 17, 18, 19, 20, 21, 51, 53, 58) in Abscheidestellung als Strömungsleitelement wirkt, das in den Strömungsweg des Rohgasstroms (12) hineinragt,
- wobei mindestens je eine als Strömungsleitelement wirkende Abscheidefläche zweier benachbart angeordneter Abscheideelemente gemeinsam eine Ablenkung des Rohgasstroms von der Hauptdurchströmungsrichtung (28) bewirken, wodurch die im Rohgasstrom enthaltenen Partikel durch Massenträgheit bedingt an den Abscheideflächen abgeschieden werden,
- wobei die Abscheideflächen zweier benachbart angeordneter Abscheideelemente in der Hauptdurchströmungsrichtung derart hintereinander angeordnet sind, dass sie nacheinander vom Rohgasstrom überstrichen werden
**dadurch gekennzeichnet, dass**
Abscheideflächen zweier zueinander benachbart angeordneter Abscheideelemente einen Abstand zueinander aufweisen.

2. Abscheidevorrichtung (4) nach Anspruch 1, **dadurch gekennzeichnet, dass** der Vorabscheider ein Abscheideelement (14, 15, 16, 17, 18, 19, 20, 21, 51, 53, 58) umfasst, welches eine Durchlassöffnung zum Durchlassen eines Teils des Rohgasstroms (12) aufweist.

3. Abscheidevorrichtung (4) nach einem der Ansprüche 1 oder 2, **dadurch gekennzeichnet, dass** der Abscheidefläche (15a', 15a", 15b', 15b", 15c', 15c", 52', 52", 52"', 56) wenigstens abschnittsweise eine Beschichtung aus einem Hilfsmaterial zugeordnet ist, das chemisch und/oder physikalisch mit gewissen Partikeln interagiert.

4. Abscheidevorrichtung (4) nach einem der Ansprüche 1 bis 3, **dadurch gekennzeichnet, dass**
- eine Beschichtung der Abscheidefläche (15a', 15a", 15b', 15b", 15c', 15c", 52', 52", 52"', 56) aus einem Hilfsmaterial gebildet ist, das ein ferromagnetisches Material umfasst, und dass
- der Vorabscheider eine Magnetspule und/oder einen Permanentmagneten für ein kontinuierliches oder intervallweises Anlegen eines magnetischen Felds an der Abscheidefläche aufweist.

5. Abscheidevorrichtung (4) nach einem der Ansprüche 1 bis 4, **dadurch gekennzeichnet, dass** der Vorabscheider eine Regenerierungsvorrichtung mit einem Abreinigungssystem aufweist, das
- zumindest einen Teil der an einer Abscheidefläche (15a', 15a", 15b', 15b", 15c', 15c", 52', 52", 52"', 56) eines Abscheideelements (14, 15, 16, 17, 18, 19, 20, 21, 51, 53, 58) abgeschiedenen Partikel,
- zumindest einen Teil eines an einer Abscheidefläche eines Abscheideelements abgeschiedenen Hilfsmaterials und/oder
- zumindest einen Teil eines an einer Abscheidefläche eines Abscheideelements abgeschiedenen Systems aus Partikeln und Hilfsmaterial von der Abscheidefläche des Abscheideelements entfernt.

6. Abscheidevorrichtung (4) nach einem der Ansprüche 1 bis 5, **dadurch gekennzeichnet, dass** die Abscheidevorrichtung einen Hauptabscheider aufweist, der zumindest einen Teil der Partikel, die den Vorabscheider passiert haben, aus dem Rohgasstrom (12) abscheidet wobei der Hauptabscheider als Faltkartonfilter (61) ausgestaltet ist und ein gefaltetes Kartonelement umfasst.

7. Abscheidevorrichtung (4) nach einem der Ansprüche 1 bis 6, **dadurch gekennzeichnet, dass** mehrere Abscheideelemente (14, 15, 16, 17, 18, 19, 20, 21, 51, 53, 58) eine bezüglich der Hauptdurchströmungsrichtung (28) unterschiedliche Tiefenposition aufweisen, wobei Rotationsachsen (26, 59) von Abscheideelementen, die eine unterschiedliche Tiefenposition aufweisen, in zwei oder mehr unterschiedlichen, zueinander beabstandet angeordneten und die Abscheidevorrichtung schneidenden Hilfsebenen (47, 48) liegen.

8. Abscheidevorrichtung (4) nach einem der Ansprüche 1 bis 7, **dadurch gekennzeichnet, dass** der Vorabscheider mindestens zwei Abscheideelemente (14, 15, 16, 17, 18, 19, 20, 21, 51, 53, 58) umfasst, wobei
- jedem Abscheideelement mindestens zwei Abscheideflächen (15a', 15a", 15b', 15b", 15c', 15c", 52', 52", 52"', 56) zugeordnet sind, an denen feste, flüssige und/oder pastöse Partikel aus dem Rohgasstrom (12) abgeschieden werden können, wobei
- die Abscheideflächen zeit- und/oder abschnittsweise mit einem Hilfsmaterial beschichtet sind, das chemisch und/oder physikalisch mit gewissen Partikeln aus dem Rohgasstrom interagiert, wobei
- ein Abscheideelement mittels einer Antriebseinheit (27, 32) um eine Rotationsachse (26, 59) drehbar ausgestaltet ist, um das Abscheideelement zwischen mehreren Arbeitspositionen zu verstellen, wobei in einer ersten Arbeitsposition des Abscheideelements eine Abscheidefläche dieses Abscheideelements sich in einer Abscheidestellung befindet, während gleichzeitig eine andere Abscheidefläche desselben Abscheideelements sich in einer Regenerierungsstellung befindet, wobei
- eine sich in einer Abscheidestellung befindende Abscheidefläche eines Abscheideelements als Strömungsleitelement wirkt, das in den Strömungsweg des Rohgasstroms hineinragt und den Rohgasstrom beim Passieren des Vorabscheiders leitet, wobei
- der Vorabscheider eine Regenerierungsvorrichtung mit einem Abreinigungssystem aufweist, das zumindest einen Teil der an einer Abscheidefläche eines Abscheideelements abgeschiedenen Partikel, zumindest einen Teil des an einer Abscheidefläche eines Abscheideelements abgeschiedenen Hilfsmaterials und/oder zumindest einen Teil des an einer Abscheidefläche eines Abscheideelements abgeschiedenen Systems aus Partikeln und Hilfsmaterial von der Abscheidefläche des Abscheideelements entfernt.

9. Anlage zur Behandlung, insbesondere zum Beschichten oder Verarbeiten von Werkstücken (1), mit einer Abscheidevorrichtung nach einem der Ansprüche 1 bis 8.

10. Verfahren zum Abscheiden von Partikeln aus einem Rohgasstrom (12) mit Hilfe einer Abscheidevorrichtung (4) nach einem der Ansprüche 1-8, welches folgende Verfahrensschritte aufweist:
- Hindurchströmen des Rohgasstroms durch einen Vorabscheider, und
- Hindurchströmen des Rohgasstroms durch einen stromabwärts zum Vorabscheider angeordneten Hauptabscheider, wobei
- die Strömungsrichtung des Rohgasstroms bei einem Durchströmen des Vorabscheiders wenigstens zeitweise von einer Hauptdurchströmungsrichtung (28) abgelenkt wird und infolge von Massenträgheitseffekten wenigstens ein Teil der Partikel aus dem den Vorabscheider durchströmenden Rohgasstrom an einer Abscheidefläche (15a', 15a", 15b', 15b", 15c', 15c", 52', 52", 52"', 56) eines Abscheideelements (14, 15, 16, 17, 18, 19, 20, 21, 51, 53, 58) abgeschieden wird, wobei das Abscheideelement eine Welle (25) sowie ein Radialflächenelement (15a, 15b, 15c, 15d, 15e, 15f, 15g, 15h) umfasst, das radial von der Welle abstehend an der Welle angeordnet ist, wobei die Abscheidefläche an dem Radialflächenelement angeordnet ist, wobei
- der Rohgasstrom einen Bereich im Vorabscheider durchströmt, in dem sich die Außenkonturen zweier zueinander benachbart angeordneter Abscheideelemente schneiden und
- der durch einen Abstand zwischen Abscheideflächen zweier zueinander benachbart angeordneter Abscheideelemente gebildet ist,
- wobei die Außenkontur eines Abscheideelements die Oberfläche eines fiktiven näherungsweise zylinderförmig und/oder prismenförmig ausgebildeten Körpers ist,
- wobei ein Abscheideelement (14, 15, 16, 17, 18, 19, 20, 21, 51, 53, 58) um eine Rotationsachse (26, 59) gedreht wird, sodass eine Abscheidefläche (15a', 15a", 15b', 15b", 15c', 15c", 52', 52", 52"', 56) des Abscheideelements, die vor der Drehung um die Rotationsachse der Hauptdurchströmungsrichtung (28) zugewandt war und vom Rohgasstrom (12) angeströmt wurde, nach der Drehung um die Rotationsachse von der Hauptdurchströmungsrichtung abgewandt ist.

11. Verfahren nach Anspruch 10, **dadurch gekennzeichnet, dass** wenigstens ein Teil des Rohgasstroms (12) eine Durchlassöffnung eines Abscheideelements (14, 15, 16, 17, 18, 19, 20, 21, 51, 53, 58) passiert und wenigstens ein Teil der Partikel (12) an dem Abscheideelement abgeschieden wird.

12. Verfahren nach einem der Ansprüche 10 bis 11, **dadurch gekennzeichnet, dass** an einer Abscheidefläche (15a', 15a", 15b', 15b", 15c', 15c", 52', 52", 52"', 56) eines Abscheideelements (14, 15, 16, 17, 18, 19, 20, 21, 51, 53, 58) Partikel aus dem Rohgasstrom (12) abgeschieden werden, während gleichzeitig eine andere Abscheidefläche desselben Abscheideelements einem Regenerierungsvorgang unterzogen und dabei regeneriert wird, wobei der Regenerierungsvorgang folgende Einzelschritte umfasst
- Entfernen wenigstens eines Teils der Partikel, des Hilfsmaterials und/oder des Systems aus Partikeln und Hilfsmaterial von einer Abscheidefläche eines Abscheideelements und
- Beschichten derselben Abscheidefläche desselben Abscheideelements mit frischem und/oder aufbereitetem Hilfsmaterial.

## Claims

1. Separating apparatus (4) for separating particles from a crude gas stream (12), wherein a proportion of solid, liquid and/or paste-like particles can be entrained in the crude gas stream, having a main separator which separates at least some of the particles from the crude gas stream, wherein the crude gas stream flows through the main separator in a main through-flow direction (28) and exits from the main separator as pure gas stream (36), wherein
- the separating apparatus has a pre-separator for separating at least some of the particles from the crude gas stream, wherein
- the pre-separator is arranged upstream of the main separator in such a way that the crude gas stream flows, in the main through-flow direction, first through the pre-separator and then through the main separator, wherein
- the pre-separator comprises a separating element (14, 15, 16, 17, 18, 19, 20, 21, 51, 53, 58) which is provided for deflecting the crude gas stream (12), wherein the separating element comprises a shaft (25), and also a radial surface element (15a, 15b, 15c, 15d, 15e, 15f, 15g, 15h) which is arranged on the shaft so as to project radially from the shaft, and which has a separating surface (15a', 15a", 15b', 15b", 15c', 15c", 52', 52", 52"', 56) which is arranged on the radial surface element and on which particles from the crude gas stream can be deposited, wherein
- outer contours of two mutually adjacently arranged separating elements intersect,
- wherein the outer contour of a separating element is the surface of an imaginary approximately cylindrical and/or prism-shaped body,
- wherein a separating element (14, 15, 16, 17, 18, 19, 20, 21, 51, 53, 58) is designed so as to be able to rotate continuously or at intervals about an axis of rotation (26, 59) in order to adjust the separating element between a plurality of working positions and has at least two separating surfaces (15a', 15a", 15b', 15b", 15c', 15c", 52', 52", 52'", 56) for separating off particles, wherein, in a first working position of the separating element, one separating surface of the separating element is located in a separating position, whereas another separating surface of the same separating element is at the same time located in a regenerating position,
- wherein, in the separating position, a separating surface (15a', 15a", 15b', 15b", 15c', 15c", 52', 52", 52'", 56) of the separating element (14, 15, 16, 17, 18, 19, 20, 21, 51, 53, 58) acts as a flow-guiding element which projects into the flow path of the crude gas stream (12),
- wherein at least one respective separating surface, acting as a flow-guiding element, of two adjacently arranged separating elements jointly bring about a deflection of the crude gas stream from the main through-flow direction (28), as a result of which the particles contained in the crude gas stream are deposited on the separating surfaces due to inertia,
- wherein the separating surfaces of two adjacently arranged separating elements are arranged in succession in the main through-flow direction in such a way that they are successively flowed over by the crude gas stream,
**characterized in that**
separating surfaces of two mutually adjacently arranged separating elements have a spacing from one another.

2. Separating apparatus (4) according to Claim 1, **characterized in that** the pre-separator comprises a separating element (14, 15, 16, 17, 18, 19, 20, 21, 51, 53, 58) which has a passage opening for the passage of a part of the crude gas stream (12).

3. Separating apparatus (4) according to either of Claims 1 and 2, **characterized in that** a coating composed of an auxiliary material, which interacts with certain particles in a chemical and/or physical manner, is assigned to at least certain portions of the separating surface (15a', 15a", 15b', 15b", 15c', 15c", 52', 52", 52"', 56).

4. Separating apparatus (4) according to one of Claims 1 to 3, **characterized in that**
- a coating of the separating surface (15a', 15a", 15b', 15b", 15c', 15c", 52', 52", 52"', 56) is formed of an auxiliary material which comprises a ferromagnetic material, and **in that**
- the pre-separator has a magnetic coil and/or a permanent magnet for applying a magnetic field to the separating surface in a continuous or intervalwise manner.

5. Separating apparatus (4) according to one of Claims 1 to 4, **characterized in that** the pre-separator has a regeneration apparatus having a cleaning system which removes
- at least some of the particles deposited on a separating surface (15a', 15a", 15b', 15b", 15c', 15c" , 52', 52", 52'", 56) of a separating element (14, 15, 16, 17, 18, 19, 20, 21, 51, 53, 58),
- at least a part of an auxiliary material deposited on a separating surface of a separating element and/or
- at least a part of a system, composed of particles and auxiliary material, which is deposited on a separating surface of a separating element from the separating surface of the separating element.

6. Separating apparatus (4) according to one of Claims 1 to 5, **characterized in that** the separating apparatus has a main separator which removes at least some of the particles, which have passed through the pre-separator, from the crude gas stream (12), wherein the main separator is designed as a concertina filter (61) and comprises a folded cardboard element.

7. Separating apparatus (4) according to one of Claims 1 to 6, **characterized in that** a plurality of separating elements (14, 15, 16, 17, 18, 19, 20, 21, 51, 53, 58) have a different depth position with respect to the main through-flow direction (28), wherein axes of rotation (26, 59) of separating elements which have a different depth position lie in two or more different auxiliary planes (47, 48) which are arranged spaced apart from one another and which intersect the separating apparatus.

8. Separating apparatus (4) according to one of Claims 1 to 7, **characterized in that** the pre-separator comprises at least two separating elements (14, 15, 16, 17, 18, 19, 20, 21, 51, 53, 58), wherein
- each separating element is assigned at least two separating surfaces (15a', 15a", 15b', 15b", 15c', 15c", 52', 52", 52"', 56) on which solid, liquid and/or paste-like particles from the crude gas stream (12) can be deposited, wherein
- the separating surfaces are coated, periodically and/or in certain portions, with an auxiliary material which interacts with certain particles from the crude gas stream in a chemical and/or physical manner, wherein
- a separating element is designed so as to be able to rotate about an axis of rotation (26, 59) by means of a drive unit (27, 32) in order to adjust the separating element between a plurality of working positions, wherein, in a first working position of the separating element, one separating surface of said separating element is located in a separating position, whereas another separating surface of the same separating element is at the same time located in a regenerating position, wherein
- a separating surface of a separating element, said surface being located in a separating position, acts as a flow-guiding element which projects into the flow path of the crude gas stream and which guides the crude gas stream during passage through the pre-separator, wherein
- the pre-separator has a regeneration apparatus having a cleaning system which removes at least some of the particles deposited on a separating surface of a separating element, at least a part of the auxiliary material deposited on a separating surface of a separating element and/or at least a part of the system, composed of particles and auxiliary material, which is deposited on a separating surface of a separating element from the separating surface of the separating element.

9. Installation for treating workpieces (1), in particular for coating or processing same, having a separating apparatus according to one of Claims 1 to 8.

10. Method for separating particles from a crude gas stream (12) by means of a separating apparatus (4) according to one of Claims 1 to 8, having the following method steps of:
- making the crude gas stream flow through a pre-separator, and
- making the crude gas stream flow through a main separator arranged downstream of the pre-separator, wherein
- the flow direction of the crude gas stream, when flowing through the pre-separator, is deflected at least temporarily from a main through-flow direction (28), and at least some of the particles from the crude gas stream flowing through the pre-separator are deposited on a separating surface (15a', 15a", 15b', 15b", 15c', 15c" , 52', 52", 52'", 56) of a separating element (14, 15, 16, 17, 18, 19, 20, 21, 51, 53, 58) as a result of inertial effects, wherein the separating element comprises a shaft (25), and also a radial surface element (15a, 15b, 15c, 15d, 15e, 15f, 15g, 15h) which is arranged on the shaft so as to project radially from the shaft, wherein the separating surface is arranged on the radial surface element, wherein,
- in the pre-separator, the crude gas stream flows through a region in which the outer contours of two mutually adjacently arranged separating elements intersect and
- which is formed by a spacing between separating surfaces of two mutually adjacently arranged separating elements,
- wherein the outer contour of a separating element is the surface of an imaginary approximately cylindrical and/or prism-shaped body,
- wherein a separating element (14, 15, 16, 17, 18, 19, 20, 21, 51, 53, 58) is rotated about an axis of rotation (26, 59), such that a separating surface (15a', 15a", 15b', 15b", 15c', 15c", 52', 52", 52"', 56) of the separating element, said surface facing towards the main through-flow direction (28) and being flowed over by the crude gas stream (12) prior to the rotation about the axis of rotation, faces away from the main through-flow direction after the rotation about the axis of rotation.

11. Method according to Claim 10, **characterized in that** at least a part of the crude gas stream (12) passes through a passage opening of a separating element (14, 15, 16, 17, 18, 19, 20, 21, 51, 53, 58) and at least some of the particles (12) are deposited on the separating element.

12. Method according to one of Claims 10 to 11, **characterized in that** particles from the crude gas stream (12) are deposited on one separating surface (15a', 15a", 15b', 15b", 15c', 15c", 52', 52", 52"', 56) of a separating element (14, 15, 16, 17, 18, 19, 20, 21, 51, 53, 58), whereas another separating surface of the same separating element is at the same time subjected to a regeneration operation and is thereby regenerated, wherein the regeneration operation comprises the following individual steps of
- removing at least some of the particles, at least a part of the auxiliary material and/or at least a part of the system composed of particles and auxiliary material from a separating surface of a separating element and
- coating the same separating surface of the same separating element with fresh and/or processed auxiliary material.

## Revendications

1. Dispositif de séparation (4) pour la séparation de particules d'un courant de gaz brut (12), une proportion de particules solides, liquides et/ou pâteuses pouvant être entraînée dans le courant de gaz brut, pourvu d'un séparateur principal, qui sépare au moins une partie des particules du courant de gaz brut, le courant de gaz brut traversant le séparateur principal dans une direction de traversée principale (28) et sortant du séparateur principal sous la forme d'un courant de gaz pur (36),
- le dispositif de séparation comprenant un séparateur préliminaire pour la séparation d'au moins une partie des particules du courant de gaz brut,
- le séparateur préliminaire étant agencé en amont du séparateur principal de telle sorte que le courant de gaz brut traverse dans la direction de traversée principale tout d'abord le séparateur préliminaire et ensuite le séparateur principal,
- le séparateur préliminaire comportant un élément de séparation (14, 15, 16, 17, 18, 19, 20, 21, 51, 53, 58), qui est prévu pour dévier le courant de gaz brut (12), l'élément de séparation comportant un arbre (25), ainsi qu'un élément de surface radial (15a, 15b, 15c, 15d, 15e, 15f, 15g, 15h), qui est agencé sur l'arbre en saillie radialement à partir de l'arbre, et qui comprend une surface de séparation (15a', 15a", 15b', 15b", 15c', 15c", 52', 52", 52"', 56) agencée sur l'élément de surface radial, sur laquelle des particules peuvent être séparées du courant de gaz brut,
- des contours externes de deux éléments de séparation agencés voisins l'un de l'autre se coupant, le contour externe d'un élément de séparation étant la surface d'un corps configuré sous forme approximativement cylindrique et/ou prismatique fictif,
- un élément de séparation (14, 15, 16, 17, 18, 19, 20, 21, 51, 53, 58) étant configuré rotatif en continu ou par intervalles autour d'un axe de rotation (26, 59), afin de déplacer l'élément de séparation entre plusieurs positions de travail, et comprenant au moins deux surfaces de séparation (15a', 15a", 15b', 15b", 15c', 15c", 52', 52", 52"', 56) pour la séparation de particules, dans une première position de travail de l'élément de séparation, une surface de séparation de l'élément de séparation se trouvant dans un emplacement de séparation, tandis que simultanément une autre surface de séparation du même élément de séparation se trouve dans un emplacement de régénération,
- une surface de séparation (15a', 15a", 15b', 15b", 15c', 15c", 52', 52", 52"', 56) de l'élément de séparation (14, 15, 16, 17, 18, 19, 20, 21, 51, 53, 58) dans un emplacement de séparation agissant en tant qu'élément de conduction d'écoulement, qui pénètre dans la trajectoire d'écoulement du courant de gaz brut (12),
- au moins à chaque fois une surface de séparation agissant en tant qu'élément de conduction d'écoulement de deux éléments de séparation agencés voisins réalisant ensemble une déviation du courant de gaz brut de la direction de traversée principale (28), ce qui entraîne une séparation des particules contenues dans le courant de gaz brut sur les surfaces de séparation en raison de l'inertie de masse,
- les surfaces de séparation de deux éléments de séparation agencés voisins étant agencées l'une après l'autre dans la direction de traversée principale de telle sorte qu'elles soient balayées successivement par le courant de gaz brut,
**caractérisé en ce que**
les surfaces de séparation de deux éléments de séparation agencés voisins l'un de l'autre présentent un écart l'une par rapport à l'autre.

2. Dispositif de séparation (4) selon la revendication 1, **caractérisé en ce que** le séparateur préliminaire comporte un élément de séparation (14, 15, 16, 17, 18, 19, 20, 21, 51, 53, 58), qui comprend une ouverture de passage pour le passage d'une partie du courant de gaz brut (12).

3. Dispositif de séparation (4) selon l'une quelconque des revendications 1 ou 2, **caractérisé en ce qu'**un revêtement en un matériau auxiliaire est associé au moins en sections avec la surface de séparation (15a', 15a", 15b', 15b", 15c', 15c", 52', 52", 52'", 56), qui interagit chimiquement et/ou physiquement avec certaines particules.

4. Dispositif de séparation (4) selon l'une quelconque des revendications 1 à 3, **caractérisé en ce que**
- un revêtement de la surface de séparation (15a', 15a", 15b', 15b", 15c', 15c", 52', 52", 52"', 56) est formé en un matériau auxiliaire, qui comporte un matériau ferromagnétique, et **en ce que**
- le séparateur préliminaire comprend une bobine magnétique et/ou un aimant permanent pour une application continue ou par intervalles d'un champ magnétique à la surface de séparation.

5. Dispositif de séparation (4) selon l'une quelconque des revendications 1 à 4, **caractérisé en ce que** le séparateur préliminaire comprend un dispositif de régénération pourvu d'un système de nettoyage, qui élimine
- au moins une partie des particules séparées sur une surface de séparation (15a', 15a", 15b', 15b", 15c', 15c", 52', 52", 52"', 56) d'un élément de séparation (14, 15, 16, 17, 18, 19, 20, 21, 51, 53, 58),
- au moins une partie d'un matériau auxiliaire séparé sur une surface de séparation d'un élément de séparation et/ou
- au moins une partie d'un système, constitué par des particules et du matériau auxiliaire, séparé sur une surface de séparation d'un élément de séparation, de la surface de séparation de l'élément de séparation.

6. Dispositif de séparation (4) selon l'une quelconque des revendications 1 à 5, **caractérisé en ce que** le dispositif de séparation comprend un séparateur principal, qui sépare au moins une partie des particules, qui sont passées au travers du séparateur préliminaire, du courant de gaz brut (12), le séparateur principal étant configuré sous la forme d'un filtre en carton plié (61) et comportant un élément en carton plié.

7. Dispositif de séparation (4) selon l'une quelconque des revendications 1 à 6, **caractérisé en ce que** plusieurs éléments de séparation (14, 15, 16, 17, 18, 19, 20, 21, 51, 53, 58) présentent une position en profondeur différente vis-à-vis de la direction de traversée principale (28), des axes de rotation (26, 59) d'éléments de séparation qui présentent une position en profondeur différente étant situés dans deux ou davantage de plans auxiliaires (47, 48) différents, agencés espacés les uns des autres et coupant le dispositif de séparation.

8. Dispositif de séparation (4) selon l'une quelconque des revendications 1 à 7, **caractérisé en ce que** le séparateur préliminaire comporte au moins deux éléments de séparation (14, 15, 16, 17, 18, 19, 20, 21, 51, 53, 58),
- au moins deux surfaces de séparation (15a', 15a", 15b', 15b", 15c', 15c", 52', 52", 52'", 56) étant associées à chaque élément de séparation, sur lesquelles des particules solides, liquides et/ou pâteuses peuvent être séparées du courant de gaz brut (12),
- les surfaces de séparation étant revêtues par moments et/ou en sections avec un matériau auxiliaire, qui interagit chimiquement et/ou physiquement avec certaines particules du courant de gaz brut,
- un élément de séparation étant configuré rotatif autour d'un axe de rotation (26, 59) au moyen d'une unité d'entraînement (27, 32), afin de déplacer l'élément de séparation entre plusieurs positions de travail, dans une première position de travail de l'élément de séparation, une surface de séparation de cet élément de séparation se trouvant dans un emplacement de séparation, tandis que simultanément une autre surface de séparation du même élément de séparation se trouve dans un emplacement de régénération,
- une surface de séparation d'un élément de séparation se trouvant dans un emplacement de séparation agissant en tant qu'élément de conduction d'écoulement, qui pénètre dans la trajectoire d'écoulement du courant de gaz brut et conduit le courant de gaz brut lors du passage au travers du séparateur préliminaire,
- le séparateur préliminaire comprenant un dispositif de régénération pourvu d'un système de nettoyage, qui élimine au moins une partie des particules séparées sur une surface de séparation d'un élément de séparation, au moins une partie du matériau auxiliaire séparé sur une surface de séparation d'un élément de séparation et/ou au moins une partie du système, constitué par des particules et du matériau auxiliaire, séparé sur une surface de séparation d'un élément de séparation, de la surface de séparation de l'élément de séparation.

9. Unité pour le traitement, notamment pour le revêtement ou l'usinage de pièces (1), pourvue d'un dispositif de séparation selon l'une quelconque des revendications 1 à 8.

10. Procédé pour la séparation de particules d'un courant de gaz brut (12) à l'aide d'un dispositif de séparation (4) selon l'une quelconque des revendications 1 à 8, qui comprend les étapes de procédé suivantes :
- l'écoulement du courant de gaz brut au travers d'un séparateur préliminaire, et
- l'écoulement du courant de gaz brut au travers d'un séparateur principal agencé en aval du séparateur préliminaire,
- la direction d'écoulement du courant de gaz brut lors d'une traversée du séparateur préliminaire étant au moins par moments déviée d'une direction de traversée principale (28) et, en conséquence d'effets d'inertie de masse, au moins une partie des particules étant séparée du courant de gaz brut traversant le séparateur préliminaire sur une surface de séparation (15a', 15a", 15b', 15b", 15c', 15c", 52', 52", 52"', 56) d'un élément de séparation (14, 15, 16, 17, 18, 19, 20, 21, 51, 53, 58), l'élément de séparation comportant un arbre (25), ainsi qu'un élément de surface radial (15a, 15b, 15c, 15d, 15e, 15f, 15g, 15h) qui est agencé sur l'arbre en saillie radialement à partir de l'arbre, la surface de séparation étant agencée sur l'élément de surface radial,
- le courant de gaz brut traversant une zone dans le séparateur préliminaire, dans laquelle les contours externes de deux éléments de séparation agencés voisins l'un de l'autre se coupent, et
- qui est formée par un écart entre des surfaces de séparation de deux éléments de séparation agencés voisins l'un de l'autre,
- le contour externe d'un élément de séparation étant la surface d'un corps configuré sous forme approximativement cylindrique et/ou prismatique fictif,
- un élément de séparation (14, 15, 16, 17, 18, 19, 20, 21, 51, 53, 58) étant mis en rotation autour d'un axe de rotation (26, 59), de telle sorte qu'une surface de séparation (15a', 15a", 15b', 15b", 15c', 15c", 52', 52", 52"', 56) de l'élément de séparation, qui avant la rotation autour de l'axe de rotation était tournée vers la direction de traversée principale (28) et sur laquelle le courant de gaz brut (12) affluait, soit détournée de la direction de traversée principale après la rotation autour de l'axe de rotation.

11. Procédé selon la revendication 10, **caractérisé en ce qu'**au moins une partie du courant de gaz brut (12) passe au travers d'une ouverture de passage d'un élément de séparation (14, 15, 16, 17, 18, 19, 20, 21, 51, 53, 58) et au moins une partie des particules (12) est séparée sur l'élément de séparation.

12. Procédé selon l'une quelconque des revendications 10 à 11, **caractérisé en ce que** des particules du courant de gaz brut (12) sont séparées sur une surface de séparation (15a', 15a", 15b', 15b", 15c', 15c", 52', 52", 52"', 56) d'un élément de séparation (14, 15, 16, 17, 18, 19, 20, 21, 51, 53, 58), tandis que simultanément une autre surface de séparation du même élément de séparation est soumise à un processus de régénération et ainsi régénérée, le processus de régénération comprenant les étapes individuelles suivantes :
- l'élimination d'au moins une partie des particules, du matériau auxiliaire et/ou du système constitué par des particules et du matériau auxiliaire d'une surface de séparation d'un élément de séparation, et
- le revêtement de la même surface de séparation du même élément de séparation avec du matériau auxiliaire frais et/ou conditionné.
